(19) Europäisches Patentamt
European Patent Office
Office européen des brevets

(11) **EP 2 329 654 B1**

(12) **EUROPEAN PATENT SPECIFICATION**

(45) Date of publication and mention of the grant of the patent:
**06.08.2014 Bulletin 2014/32**

(21) Application number: **09792920.2**

(22) Date of filing: **23.09.2009**

(51) Int Cl.:
*H04N 21/438* (2011.01) *H04N 21/4425* (2011.01)
*H04N 19/89* (2014.01) *H04N 21/4385* (2011.01)
*H04N 21/2383* (2011.01) *H04N 21/2389* (2011.01)

(86) International application number:
**PCT/US2009/058113**

(87) International publication number:
**WO 2010/036739 (01.04.2010 Gazette 2010/13)**

(54) **DEVICES OF DIGITAL VIDEO RECEPTION AND OUTPUT HAVING ERROR DETECTION AND CONCEALMENT CIRCUITRY AND TECHNIQUES**

VORRICHTUNGEN FÜR DIGITALEN VIDEOEMPFANG UND -AUSGANG MIT FEHLERERKENNUNGS- UND VERDECKUNGSSCHALTUNG SOWIE VERFAHREN

DISPOSITIFS DE RÉCEPTION ET DE REPRODUCTION DE VIDÉO NUMÉRIQUE BÉNÉFICIANT DE CIRCUITS ET DE TECHNIQUES DE DÉTECTION ET DE MASQUAGE D'ERREUR

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(30) Priority: **26.09.2008 US 194315 P**

(43) Date of publication of application:
**08.06.2011 Bulletin 2011/23**

(73) Proprietor: **Telegent Systems, Inc.**
**George Town, Grand Cayman (KY)**

(72) Inventors:
• **GUO, Shaori**
**San Jose, CA 95129 (US)**
• **CHENG, Shi**
**Sunnyvale, CA 94087 (US)**
• **YUAN, Zubing**
**San Jose, CA 95129 (US)**

(74) Representative: **Eisenführ Speiser**
**Patentanwälte Rechtsanwälte PartGmbB**
**Johannes-Brahms-Platz 1**
**20355 Hamburg (DE)**

(56) References cited:
**EP-A- 1 111 935      EP-A- 1 940 167**
**US-A1- 2005 089 104**

• **KAISER S ET AL: "Comparison of error concealment techniques for an MPEG-2 video decoder in terrestrial TV-broadcasting<1>" SIGNAL PROCESSING. IMAGE COMMUNICATION, ELSEVIER SCIENCE PUBLISHERS, AMSTERDAM, NL, vol. 14, no. 6-8, 1 May 1999 (1999-05-01), pages 655-676, XP004165401 ISSN: 0923-5965**

**Description**

**RELATED APPLICATION**

This non-provisional application claims priority to U.S. Provisional Application Serial No. 61/194,315, entitled "Devices and Methods of Digital Video and/or Audio Reception and/or Output having Error Detection and/or Concealment Circuitry and Techniques", filed September 26, 2008 (hereinafter "the Provisional Application"); the contents of the Provisional Application are incorporated by reference herein, in their entirety.

**INTRODUCTION**

The present inventions relate to devices and/or methods of digital video and/or audio reception and/or output, having and/or implementing error detection and/or concealment circuitry and techniques to detect, locate and conceal errors in the received signals in video and/or audio decoding systems. More particularly, in one aspect, to a satellite, terrestrial and/or cable receiver (for example digital broadcasting TV receiver (for example, a mobile-type TV receiver)) which implements transport stream de-multiplexer circuitry, having error detection, identification, and/or concealment circuitry therein, to detect one or more errors in the transport stream and, under certain conditions, in response thereto, to conceal such one or more errors to, for example, a user, operator, listener and/or viewer.

Briefly, a digital broadcast TV receiver may generally consist of a TV tuner for (i) tuning the receiver to, for example, a user selected channel of the frequency band and (ii) converting the received RF signal to a baseband signal. The digital broadcast TV receiver also includes baseband processor circuitry that responsively acquires one or more channels (associated with one or more of the user selected channels) by demodulating and decoding the baseband signal into a transport data stream. The digital broadcast TV receiver further includes transport stream de-multiplexer circuitry to identify the selected program stream and extract and separate audio and video data streams from the transport data stream.

The digital broadcasting TV receiver also includes video and audio decoder circuitry which decompresses or decodes the corresponding audio and video data streams. Video and audio output circuitry provides video and audio rendering functions using the decompressed or decoded audio and video data streams. Finally, the digital broadcasting TV receiver generally includes a user interface (for example, a display and/or a speaker(s)) for corresponding video display and/or audio play-back.

When the digital broadcast TV reception is interrupted, insufficient, erroneous, inadequate and/or incompatible due to, for example, interference (for example, weather Interference), transport stream packets, having errors contained therein, are often received by the digital broadcasting TV receiver. In conventional systems, the baseband processing circuitry (including, for example, channel decoder circuitry) responsively demodulates and decodes the baseband signal into transport stream packets having one or more error bits and/or flags enabled or asserted (for example, the transport error indicator ('TEI") bit in an MPEG-2 environment) for those packets having errors contained therein. In the MPEG-2 environment, the de-multiplexer circuitry typically discards a transport stream packet having an asserted TEI bit or flag. When video elementary stream and/or audio elementary stream are/is corrupted, the video decoder and/or audio decoder often generate erroneous video and audio data. Audio and video artifacts may present when the erroneous audio and video data are played back and/or displayed to, for example, a user, operator, listener and/or viewer.

The European patent application EP 1 940 167 A1 discloses a digital broadcast receiver. This receiver receives a TS carrier signal transmitted from a digital broadcast station, and reproduces a video and audio signal contained in the received TS carrier signal. This digital broadcast receiver has a demodulation unit that obtains a TSP sequence by demodulating the received TS carrier signal. This demodulation unit detects at least one erroneous TSP containing a transmission error. The digital broadcast receiver also has a demultiplexer that separates a video TSP and the erroneous TSP from the TSP sequence as a video TSP sequence, and converts the video TSP sequence to an ES sequence after replacing one or a plurality of continuous erroneous TSP with a single unique data fragment. The digital broadcast receiver also has a video decoder that restores the video signal by carrying out decoding of the ES sequence.; This video decoder carries out error processing in accordance with detection of the unique data fragment.

US patent application US 2005/0089104 A1 is also concerned with a method and apparatus for detecting an error during video decoding and handling of the error. Accordingly, an error is detected in a received video stream having a predetermined format, error information is recorded at a predetermined location of the video stream, and the type of the error is determined using the recorded error information. The video decoder includes a broadcast signal receiver that extracts a broadcast stream from a broadcast signal being transmitted via a transmission medium, a demultiplexing and error detection unit that demultiplexes the broadcast stream of a predetermined format extracted by the broadcast signal receiver for extraction of a video stream, detects errors in packets making up the extracted video stream, and records error information at a predetermined location of the video stream, and a video decoding unit that interprets the error information, determines the type of the errors using a predetermined method, and decodes the video stream according to the result of determination. The type and position of an error may be determined during video decoding. The video decoder is able to improve video quality by performing proper error concealment according to the type of error determined.

The European patent application 1 111 935 A1 discloses a data demultiplexer in a media demultiplexer. This data demultiplexer dissolves a bit stream into video packets and audio packets. A CRC calculating unit subjects data from a CRC character isolating unit to the same calculation as performed at the encoding end and outputs a result of calculation to an error information adding unit. The error information adding unit compares the result of calculation with a CRC character attached to the video packet so as to determine whether they match. The error information adding unit adds error information based on a result of determination to the video packet. The resultant revised video packet is output to a video decoder via a buffer.

Finally, Kaiser et al in "Comparison of error concealment techniques for an MPEG-2 video decoder in terrestrial TV-broadcasting" SIGNAL PROCESSING, IMAGE COMMUNICATION, ELSEVIER SCIENCE PUBLISHERS, AMSTERDAM, NL, vol. 14, no. 6-8, 1 May 1999, pages 655-676, ISSN: 0923-5965 suggests improvements in a two layer hierarchical transmission system. In particular, some post-processing techniques such as error concealment at the receiver side is discussed.

## SUMMARY OF THE INVENTIONS

In a first principle aspect, certain of the present inventions are directed to a device to output video data (for example, corresponding to a selected channel which is one of a plurality of channels of a broadcast spectrum), the device comprising (i) baseband processor circuitry to demodulate a baseband signal into a data stream (for example, MPEG type data stream, such as an MPEG-2 transport or program data stream) having a plurality of packets including a plurality of video packets wherein each video packet includes video payload, (ii) de-multiplexer circuitry, coupled to the baseband processor circuitry, to: (a) de-multiplex the data stream to obtain the video payload of the plurality of video, (b) detect and locate one or more errors in one or more of the video packets, and (c) generate error characterization data (for example, information which is representative of the type of error and/or the location of the error in the video payload) which is representative of or characterizes one or more errors in the one or more of the video packets; and (iii) decoder circuitry, coupled to the de-multiplexer circuitry, to: (a) receive the video payload and the error characterization data, and (b) conceal the one or more errors in the video payload using the error characterization data and output video data using the video payload and the video error characterization data.

In accordance with the present invention, there is provided a device to output video data, the device comprising baseband processor circuitry to demodulate a baseband signal into a data stream (for example, MPEG type data stream, such as an MPEG-2 transport or program data stream) having a plurality of packets including a plurality of video packets wherein each video packet includes video payload, and wherein the baseband processor circuitry outputs the data stream corresponding to the selected channel of the broadband spectrum, the selected channel being one of a plurality of channels of a broadband spectrum, and de-multiplexer circuitry, coupled to the baseband processor circuitry, to: (i) de-multiplex the data stream to obtain the video payload associated with each video packet, (ii) detect and locate one or more errors in a video payload, and (iii) generate video error characterization data (for example, data which is representative of the type of error and/or the location of the error in the video payload) in response to the detection of an error in a video payload. The device further includes video decoder circuitry, coupled to the de-multiplexer circuitry, to: (i) receive the plurality of video payloads and the video error characterization data, (ii) decompress the video payloads, and (iii) conceal one or more errors detected in a video payload using video error characterization data associated therewith, the errors characterization data Indicating an error case selected from a plurality of error cases, the plurality of error cases comprising loss of lock, loss of TP sync error, and transport error indicator.

The video decoder circuitry may generate output video data using the video payloads and the video error characterization data. Indeed, the device may further include a user interface to display video which is representative of the output video data.

In another embodiment, the de-multiplexer circuitry further de-multiplexes the data stream into a plurality of audio packets and de-multlplexer circuitry is configured to (i) detect and locate one or more errors in an audio payload of an audio packet, and (ii) generate audio error characterization data (which may be representative of the type of error and/or the location of the error in the audio payload) which is representative of or characterizes one or more errors detected in the audio payload. The device, in this embodiment, may Include audio decoder circuitry, coupled to the de-multiplexer circuitry, to (i) receive the audio payload and the audio error characterization data, (ii) decompress the audio payload, and (iii) conceal one or more errors detected in the audio payload using the audio error characterization data.

In one embodiment, the video decoder circuitry may generate output video data using the video payload and video error characterization data, the audio decoder circuitry may generate output audio data using the audio payload and audio error characterization data, and the device may further include a user interface to (i) display video which is representative of the output video data and (ii) output audio which is representative of the output audio data.

In another principal aspect, the present inventions are directed to a device to output video data corresponding to a selected program which is associated with a data stream (for example, transport data stream or a program data stream) which includes a plurality of video packets, the device comprises de-multiplexer circuitry (i) to de-multiplex the data stream into a plurality of video packets wherein each video packet includes video payload, and (ii) configured to detect and locate one or more errors in one or more of the video packets. The de-multiplexer circuitry of this embodiment includes error data generation circuitry to generate a plurality of descriptor, wherein each descriptor is associated with a video payload. The descriptor includes a video error flag, wherein the video error flag is enabled when an error is detected in the video packet of the associated video payload, and video error characterization data which is representative of or characterizes one or more errors in the video packet when an error is detected in the video packet of the associated video payload.

The device of this aspect includes video decoder circuitry, coupled to the de-multiplexer circuitry, to: receive a plurality of video payloads and the descriptors associated therewith, and generate output video data using (i) the plurality of received video payloads and (ii) if a video error flag of a descriptor associated with a video payload of the received video payloads is enabled, the descriptor associated with the video payload having the enabled video error flag.

The video error characterization data may include information which is representative of the type of error and the location of the error in the video packet of the associated video payload. The data stream may be is an MPEG type data stream. Moreover, each video packet further Includes a video header. Further, the de-multiplexer circuitry may output the descriptor and the associated video payload substantially simultaneously to the video decoder circuitry.

In one embodiment, the plurality of received video payloads includes a first video payload and the first video payload is associated with a first descriptor, wherein, in response to an enabled video error flag of the first descriptor, the video decoder circuitry generates the output video data using the first video payload and the video error characterization data of the first descriptor by the concealing one or more errors in the first video payload based on the video error characterization data of the first descriptor.

The device may include a user interface to display video which is representative of the output video data. The device of this embodiment may also include baseband processor circuitry to demodulate a baseband signal into the data stream having a plurality of the video packets, and wherein the baseband processor circuitry outputs the data stream corresponding to a selected channel to the de-multiplexer circuitry.

In another embodiment of this aspect of the inventions, the de-multiplexer circuitry (i) further de-multiplexes the data stream into a plurality of audio packets, wherein each audio packet Includes an audio payload, and (ii) is configured to detect and locate one or more errors in one or more of the audio packets. In addition, the error data generation circuitry further generates a plurality of audio descriptors, wherein each audio descriptor is associated with an audio payload, and wherein the audio descriptor includes (i) an audio error flag, wherein the audio error flag is enabled when an error is detected in the audio packet of the associated audio payload, and (ii) audio error characterization data which is representative of or characterizes one or more errors in the audio packet when an error is detected in the audio packet of the associated audio payload. Further, the device further includes audio decoder circuitry, coupled to the de-multiplexer circuitry, to (i) receive a plurality of audio payloads and the descriptors associated therewith, and (ii) generate output audio data using the audio payload and, if the audio error flag of the associated audio descriptor is enabled, the audio descriptor associated therewith.

The device may include a user interface to (i) display video which is representative of the output video data and (ii) output audio which is representative of the output audio data. The audio error characterization data may include information which is representative of the type of error and/or the location of the error in the associated audio payload.

Further, the device may include baseband processor circuitry to demodulate a baseband signal into the data stream having a plurality of the video packets and a plurality of the audio packets, and wherein the baseband processor circuitry outputs the data stream corresponding to a selected channel to the de-multiplexer circuitry.

## BRIEF DESCRIPTION OF THE DRAWINGS

In the course of the detailed description to follow, reference will be made to the attached drawings. These drawings show different aspects of the present inventions and, where appropriate, reference numerals illustrating like structures, components, materials and/or elements in different figures are labeled similarly. It is understood that various combinations of the structures, components, and/or elements, other than those specifically shown, are contemplated and are within the scope of the present inventions.

Moreover, there are many inventions described and illustrated herein. The present inventions are neither limited to any single aspect nor embodiment thereof, nor to any combinations and/or permutations of such aspects and/or embodiments. Moreover, each of the aspects of the present inventions, and/or embodiments thereof, may be employed alone or in combination with one or more of the other aspects of the present inventions and/or embodiments thereof, For the sake of brevity, certain permutations and combinations are not discussed and/or illustrated separately herein.

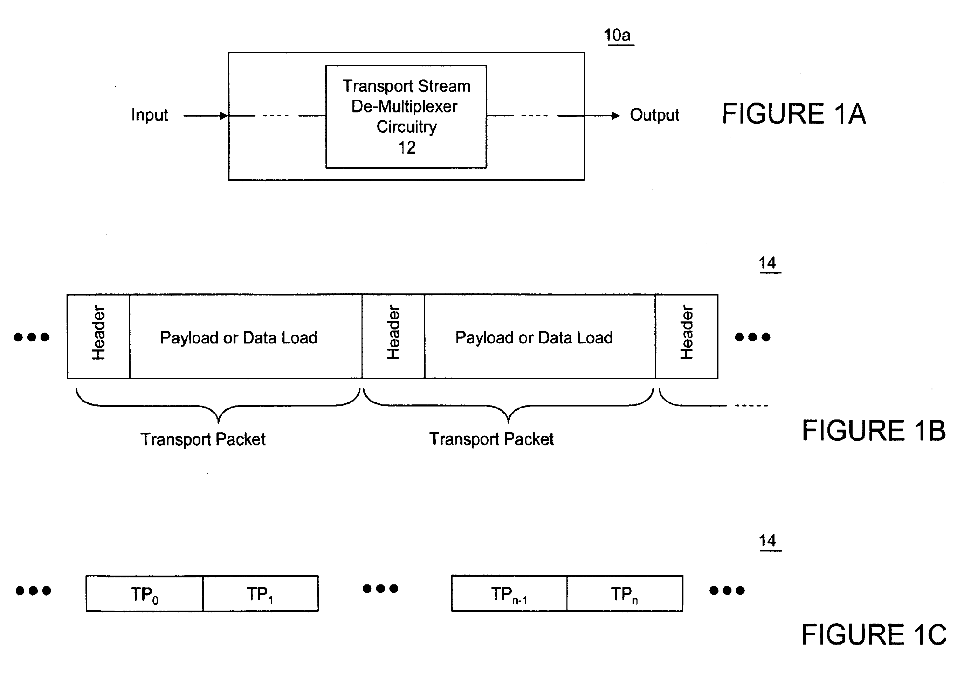

FIGURE 1A is a schematic block diagram representation of receiver circuitry, including transport stream de-multiplexer circuitry, according to at least certain aspects of the present inventions:

FIGURES 1B and 1C are block diagram illustrations of exemplary transport data streams received by the transport stream de-multiplexer circuitry, wherein each transport packet (TP) in FIGURE 1C includes a payload or data load and may include a header;

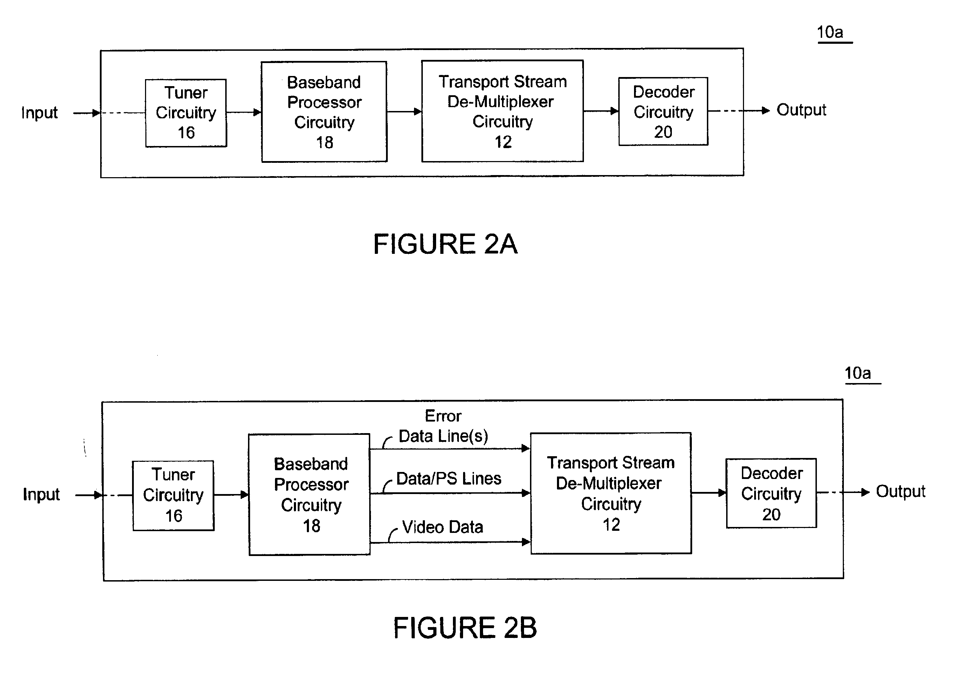

FIGURES 2A and 2B are schematic block diagram representations of exemplary receiver circuitry for use in a digital broadcasting TV environment, including tuner circuitry, baseband processor circuitry (which may include demodulator, and/or channel decoder circuitry, and/or descrambler circuitry), transport stream de-multiplexer circuitry and decoder circuitry, according to at least certain aspects of certain embodiments of the present inventions;

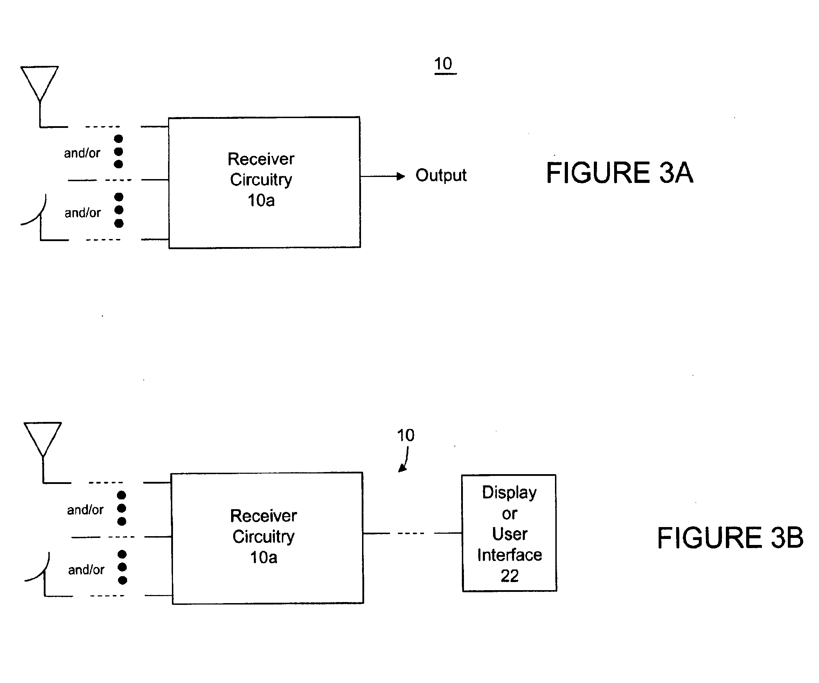

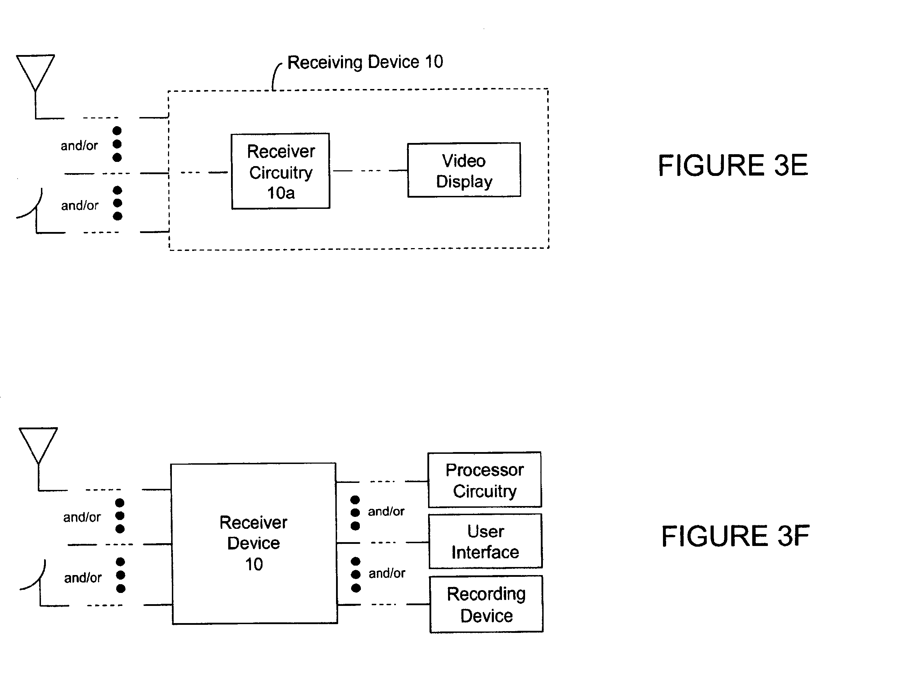

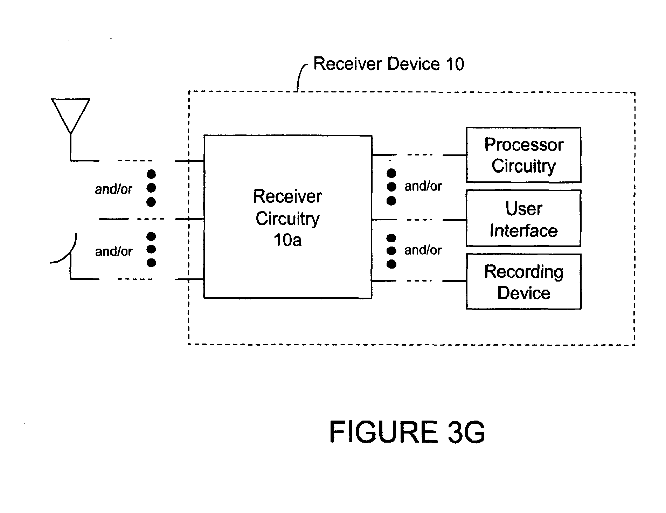

FIGURES 3A-3G are schematic block diagram illustrations of exemplary receiver circuitry, according to any of the embodiments described and/or illustrated herein, coupled to a mechanism to receive a broadcast spectrum from, for example, an electrically or optically conductive medium, in conjunction with a processor, a user interface (for example, video display) and/or a recording device, according to at least certain aspects of certain embodiments of the present inventions;

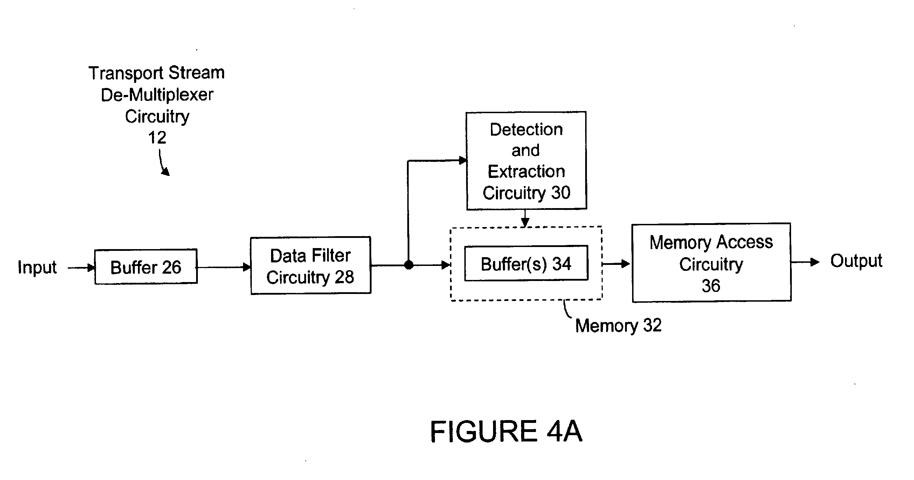

FIGURES 4A-4D illustrate detailed schematic block diagrams of exemplary transport stream de-multiplexer circuitry, according to at least one embodiment of at least one aspect of the present inventions, wherein such exemplary transport stream de-multiplexer circuitry may be suitable for implementation in satellite, terrestrial and/or cable digital television environments (including, for example, digital television receiver (for example, digital broadcasting TV receiver, such as, a mobile-type TV receiver)) and/or digital data (video and/or audio) playback devices;

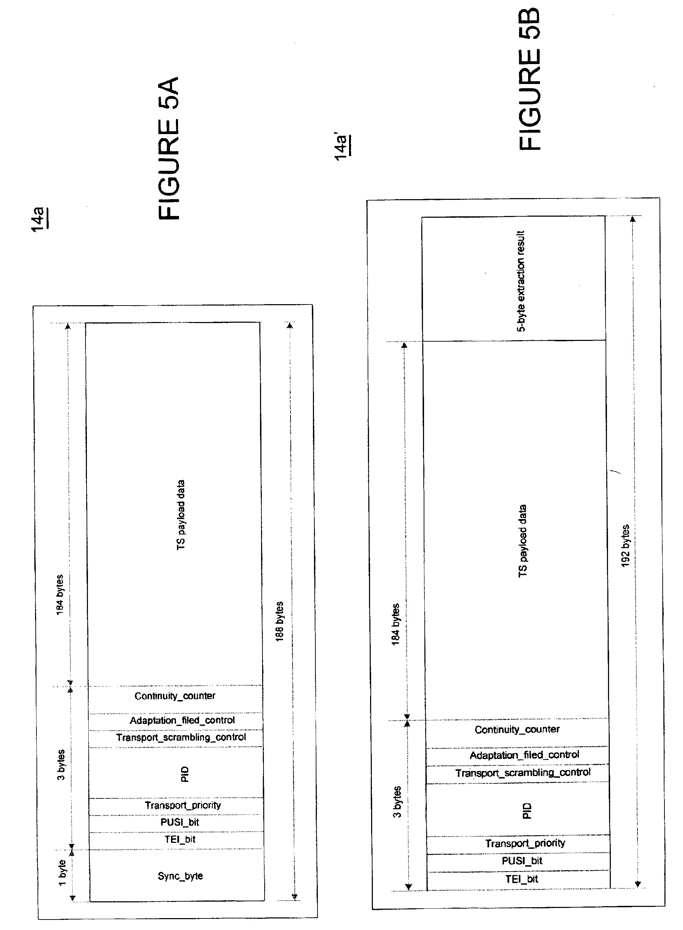

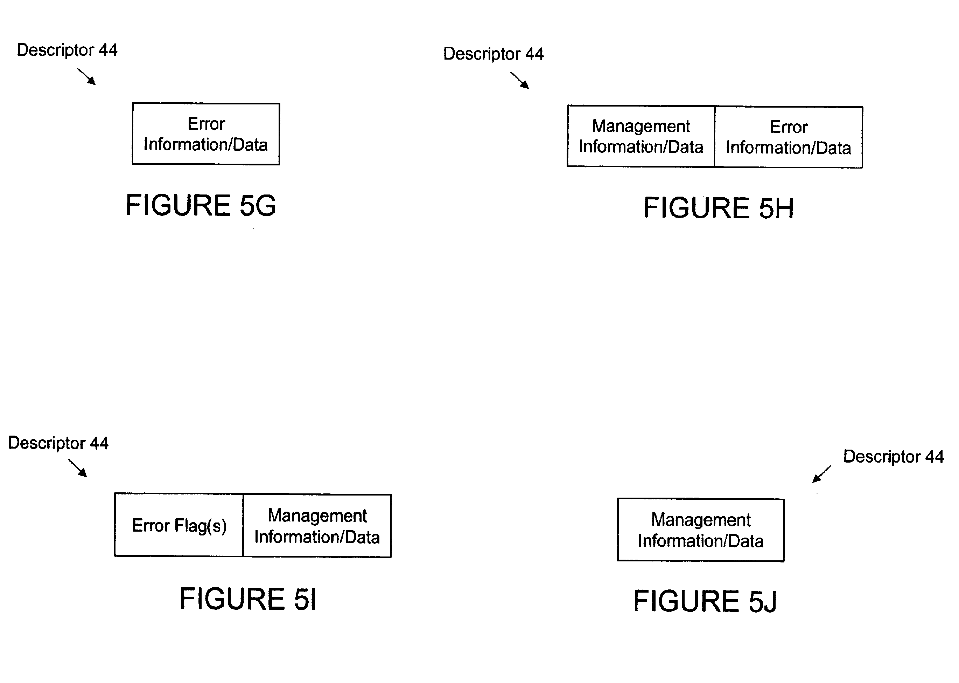

FIGURE 5A is a block diagram illustration of a transport data stream received by the transport stream de-multiplexer circuitry; and

FIGURE 5B is a block diagram illustration of a demodulated and modified data stream output by the transport stream de-multiplexer circuitry.

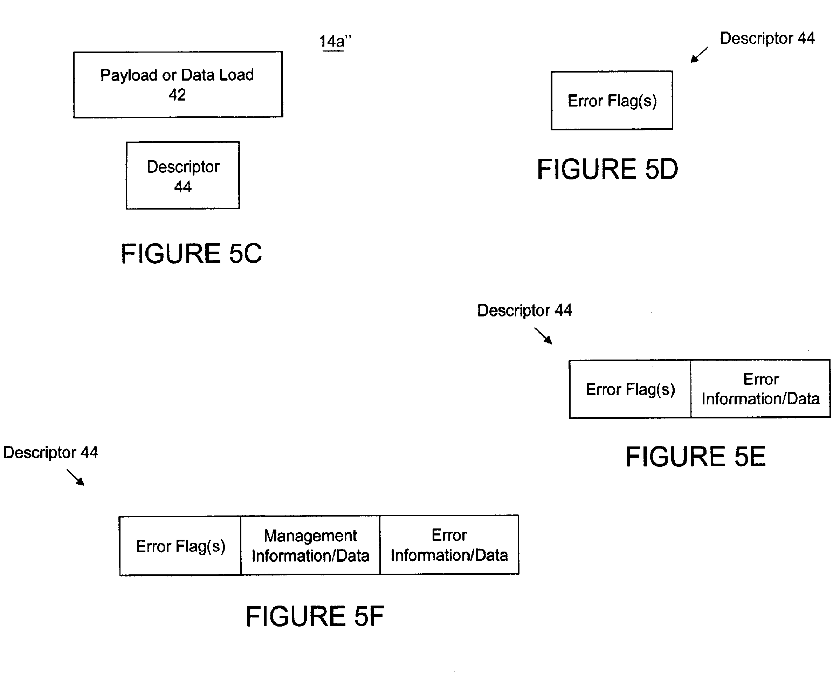

FIGURE 5C is a block diagram illustration of a demodulated transport data stream wherein the demodulated transport data stream includes (i) a decoded payload or data load and (ii) a descriptor or descriptor packet which includes, among other things, data which is representative of error information (for example, characteristics of the error including, for example, the type of error, the location of the error, and/or the extent of the error) in an associated payload or data load;

FIGURES 5D-5J are block diagram illustrations of exemplary descriptors or descriptor packets which may include, for example, error flags or indicators, management information/data, and/or error information/data;

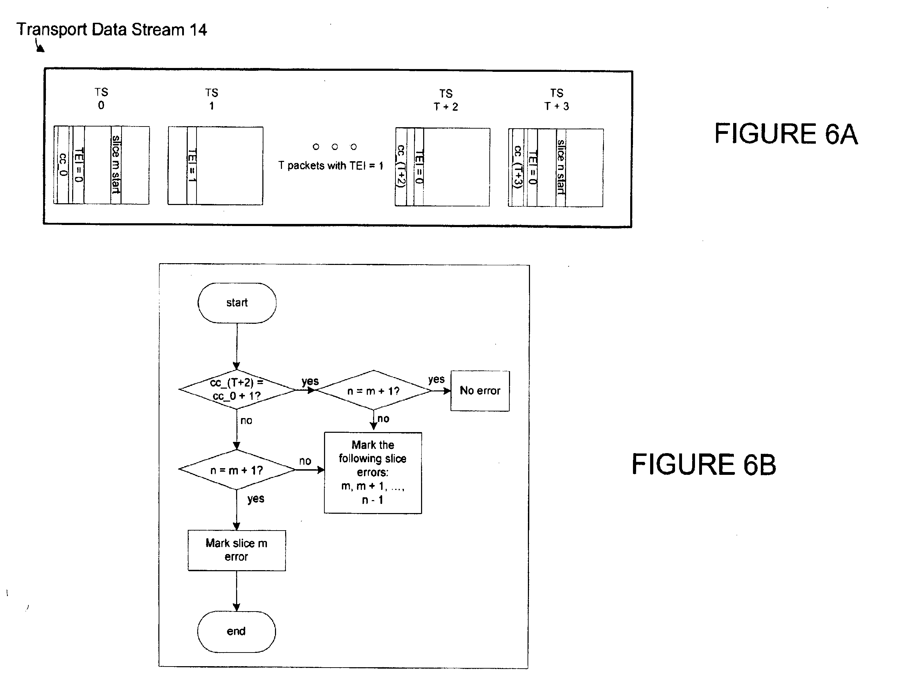

FIGURE 6A is a block diagram illustration of a plurality of exemplary data stream packets of a transport data stream received by transport stream de-multiplexer circuitry;

FIGURE 6B is a flow chart of an exemplary process of detecting, identifying and/or locating one or more errors in one or more slices contained in a transport data stream (and packets thereof) received and analyzed by transport stream de-multiplexer circuitry;

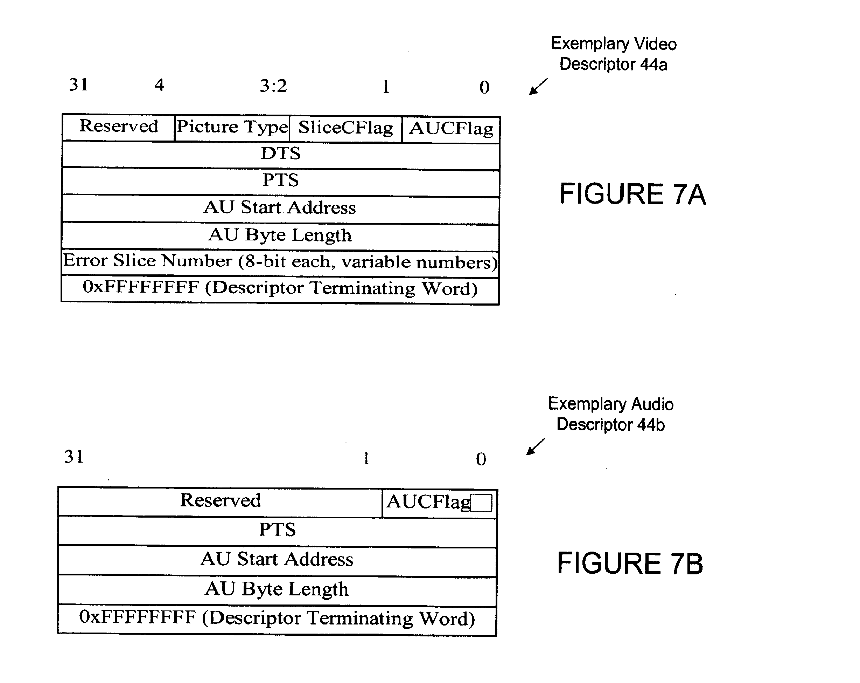

FIGURE 7A is a block diagram illustration of an exemplary video descriptor or video descriptor packet which is generated, formed and/or output by the error data generation circuitry;

FIGURE 7B is a block diagram illustration of an exemplary audio descriptor or audio descriptor packet which is generated, formed and/or output by the error data generation circuitry;

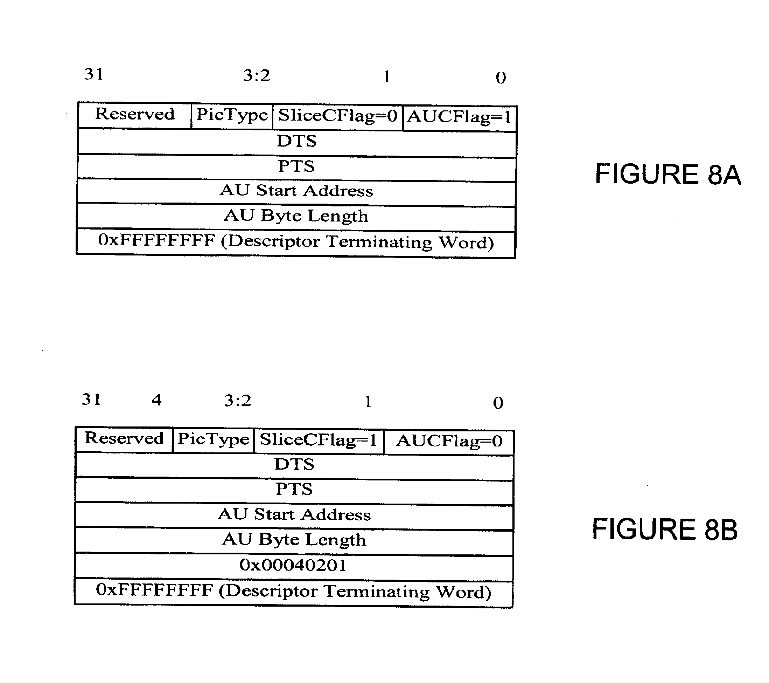

FIGURE 8A is a block diagram illustration of an exemplary video descriptor or video descriptor packet which is generated, formed and/or output by the error data generation circuitry, wherein the access unit concealment flag ("AUCFlag") is enabled thereby reflecting that some form or type of concealment is to be performed (by the decoder or processor circuitry) on the entire associated video payload or data load of the packet of the transport data stream which is associated with the exemplary video descriptor or video descriptor packet;

FIGURE 8B is a block diagram illustration of an exemplary video descriptor or video descriptor packet which is generated, formed and/or output by the error data generation circuitry, wherein the access unit concealment flag ("AUCFlag") is disabled and the slice number concealment flag ("SliceCFlag") is enabled, thereby reflecting that one or more slices of the decoded video data of payload or data load, associated with the exemplary video descriptor or video descriptor packet is erroneous, which may require that some form or type of concealment be performed (by the decoder or processor circuitry) on the certain slices of the associated video payload or data load of the packet of transport data stream which is associated with the exemplary video descriptor or video descriptor packet;

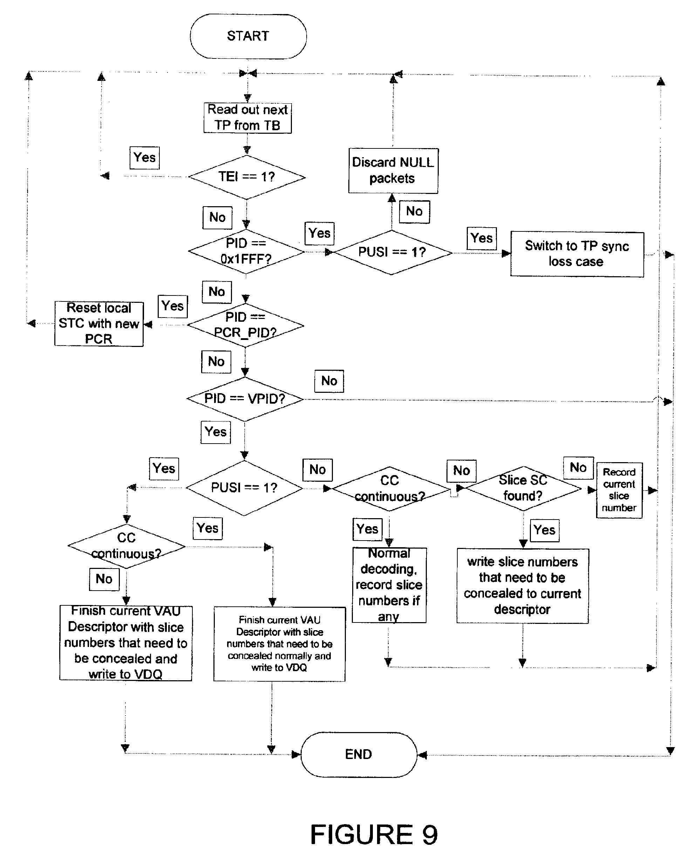

FIGURE 9 is a flow chart of an exemplary process of detecting, identifying and/or locating one or more errors in one or more slices contained in a packet of the transport data stream when the transport stream de-multiplexer circuitry reads out a packet of transport data stream having an asserted or enabled TEI bit;

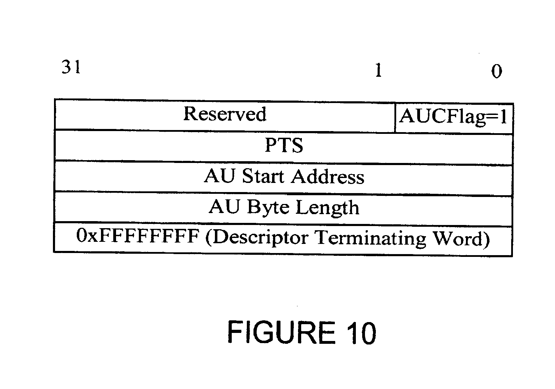

FIGURE 10 is a block diagram illustration of an exemplary audio descriptor or audio descriptor packet generated by the error data generation circuitry, wherein the access unit concealment flag ("AUCFlag") is enabled, thereby reflecting that some form or type of concealment is to be performed (by the decoder or processor circuitry) on the associated audio payload or data load of the packet of the transport data stream which is associated with the exemplary audio descriptor or audio descriptor packet;

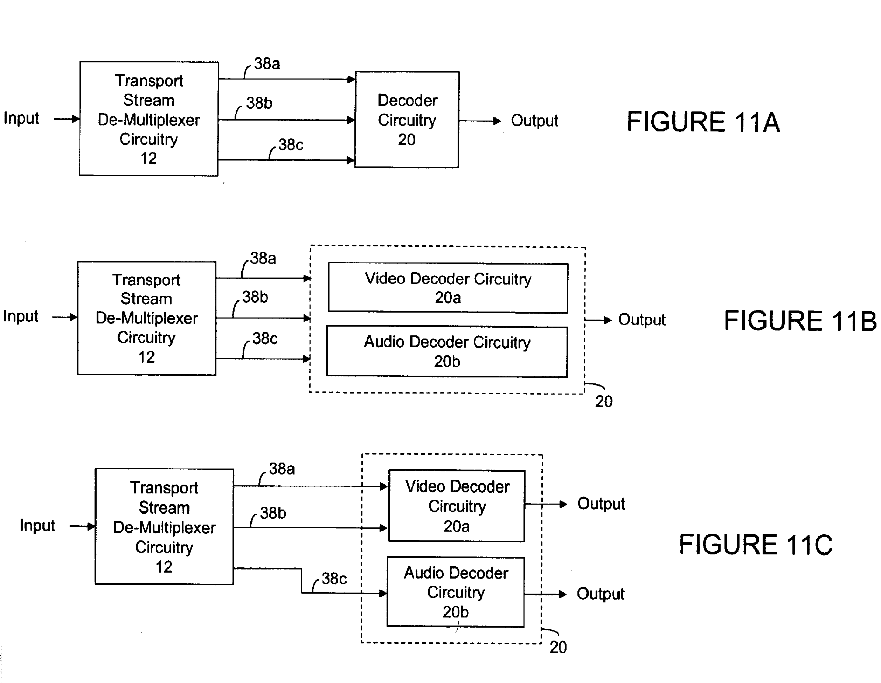

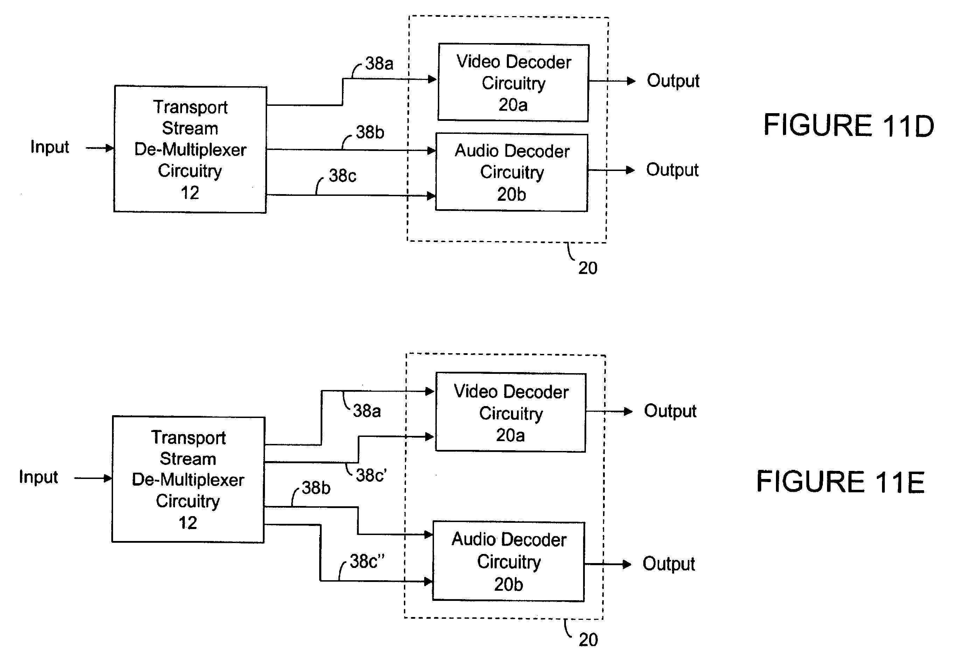

FIGURES 11A-11E are block diagram illustrations of exemplary transport stream de-multiplexer circuitry, coupled to video decoder circuitry and/or audio decoder circuitry, to provide a demodulated data stream and, in certain circumstances error data or information (which may be provided via dedicated and/or multiplexed/shared signal lines), according to at least certain aspects of certain embodiments of the present inventions;

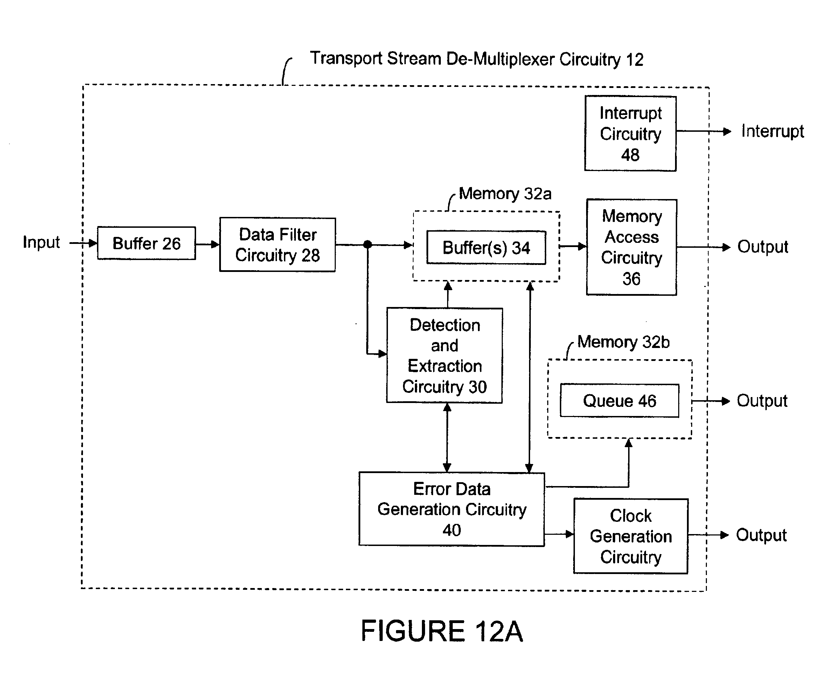

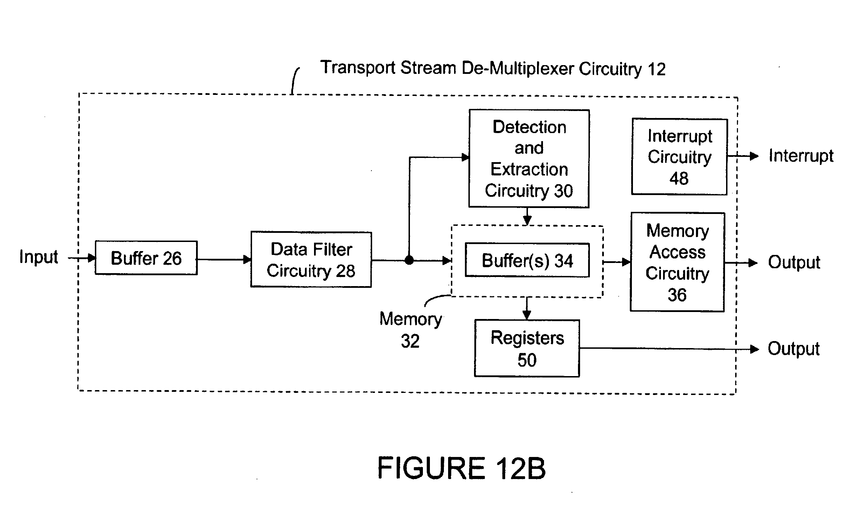

FIGURES 12A and 12B illustrate schematic block diagrams of exemplary transport stream de-multiplexer circuitry, according to at least one embodiment of at least one aspect of the present inventions;

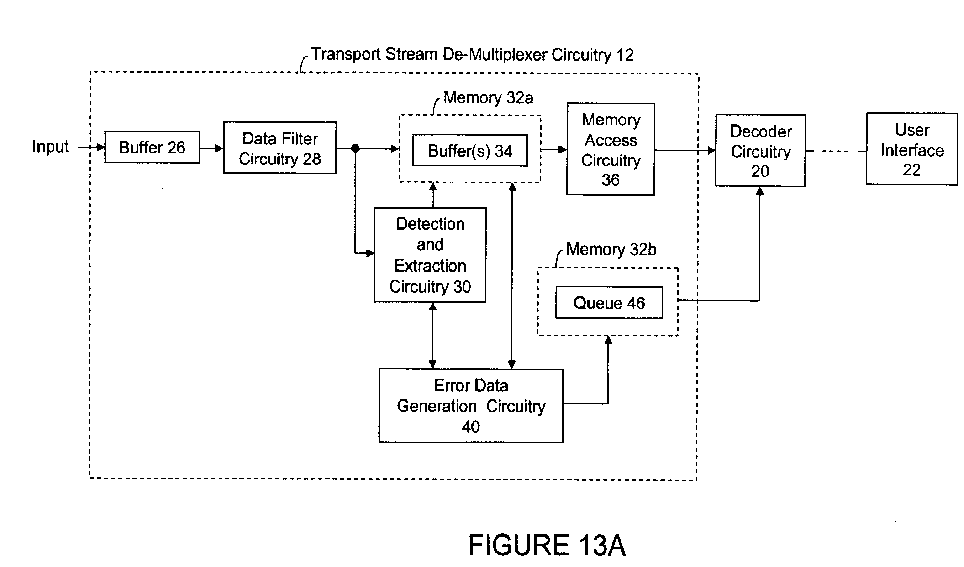

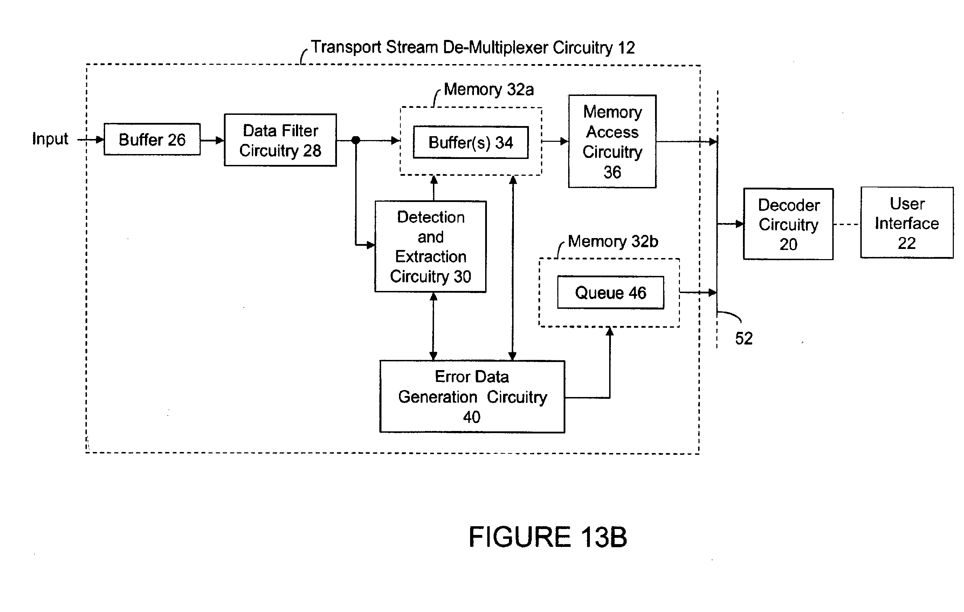

FIGURES 13A and 13B illustrate schematic block diagrams of certain exemplary transport stream de-multiplexer circuitry (although all exemplary embodiments of the transport stream de-multiplexer circuitry described and/or illustrated herein are suitable as well), in conjunction with decoder circuitry and a user interface (for example, display and/or speaker), according to at least one embodiment of at least one aspect of the present inventions;

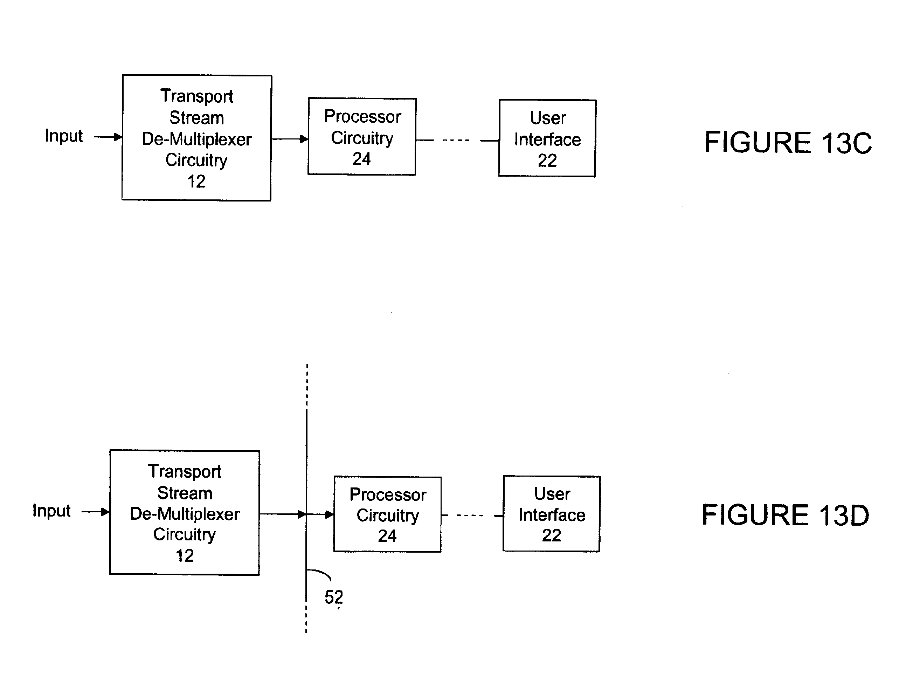

FIGURES 13C and 13D illustrate schematic block diagrams of transport stream de-multiplexer circuitry according to any of the embodiments described and/or illustrated herein, in conjunction with processor circuitry and a user interface (for example, display and/or speaker), according to at least one embodiment of at least one aspect of the present inventions; and

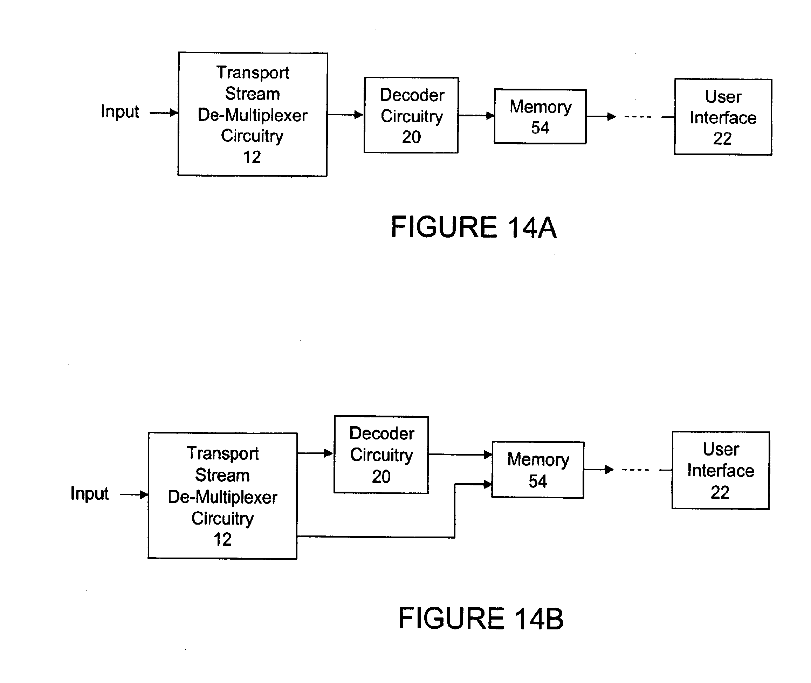

FIGURES 14A and 14B illustrate schematic block diagrams of exemplary transport stream de-multiplexer circuitry, in conjunction with decoder circuitry, memory and a user interface (for example, display and/or speaker), according to at least one embodiment of at least one aspect of the present inventions.

Again, there are many inventions described and illustrated herein. The present inventions are neither limited to any single aspect nor embodiment thereof, nor to any combinations and/or permutations of such aspects and/or embodiments. Each of the aspects of the present inventions, and/or embodiments thereof, may be employed alone or in combination with one or more of the other aspects of the present inventions and/or embodiments thereof. For the sake of brevity, many of those combinations and permutations are not discussed separately herein.

## DESCRIPTION OF THE INVENTIONS

There are many inventions described and illustrated herein. In one aspect, the present inventions are directed to de-multiplexer circuitry for use in video and/or audio decoding systems that, in addition to de-multiplexing of transport data streams (for example, a MPEG-2 type data streams), includes (i) circuitry to detect and/or identify one or more errors in one or more packets of a transport data stream, (ii) circuitry to locate one or more errors in one or more packets of a transport data stream, and/or (iii) circuitry to conceal or mask the one or more errors in one or more packets of the transport data stream prior to providing and/or outputting the de-multiplexed transport data stream to video and/or audio decoder circuitry. The present inventions may be employed in a satellite, terrestrial and/or cable digital television environment (including, for example, digital television receiver (for example, digital broadcasting TV receiver, for example, mobile-type TV receiver)) and/or digital data (video and/or audio) playback devices (for example, Compact Disc (CD) or Digital Versatile Disc (DVD) player). The concealed errors in one or more packets of a transport data stream may be, under certain conditions, less-noticeable or unnoticeable to, for example, a user, operator, listener and/or viewer. Indeed, the concealment circuitry may reduce, minimize, and/or eliminate any adverse impact of the errors in one or more packets of a transport data stream to, for example, a user, operator, listener and/or viewer.

In another aspect, the present inventions are directed to methods of detecting and/or identifying one or more errors in one or more packets of a transport data stream (for example, a MPEG-2 type data stream), locating one or more errors in one or more packets of a transport data stream and/or, under certain circumstances, concealing or masking the one or more errors in one or more packets of the transport data stream prior to providing the de-multiplexed transport data stream to video and/or audio decoder circuitry. Again, the present inventions may be employed in a satellite, terrestrial and/or cable digital television environment (among others) and/or receiver (for example digital broadcasting TV receiver) which implements coded transport data stream communications. The methods according to certain aspects of the present inventions may, under certain conditions, conceal errors in one or more packets of a transport data stream such that any adverse impact of such errors are reduced, minimized, and/or eliminated in one or more packets of a transport data stream.

In yet another aspect, the present inventions are directed to circuitry and methods of detecting and/or identifying one or more errors in one or more packets of a transport data stream (for example, a MPEG-2 type data stream), locating one or more errors in one or more packets of a transport data stream, and/or, in response, generating and outputting, in conjunction with the de-multiplexed transport data stream, or separately therefrom, signals or data which are representative of or characterize error information (for example, characteristics of the error including, for example, the type of error, the location of the error, and/or the extent of the error), to video and/or audio decoder circuitry. In these embodiments, the video and/or audio decoder circuitry may interpret, analyze and/or employ the signals or data which are representative of error information (or characterize errors) and conceal or mask the one or more errors in one or more packets of the transport data stream.

Thus, in addition to or in lieu of implementing error concealment circuitry and techniques in the de-multiplexer circuitry, error concealment circuitry and techniques may be implemented in video and/or audio decoder circuitry, wherein such error concealment circuitry and techniques employ the data which are representative of error information and, under certain circumstances, conceal or mask errors in one or more packets of the transport data stream. In this regard, the video and/or audio decoder circuitry may receive the error information from or generated by the de-multiplexer circuitry (separately from, substantially coincident with and/or in conjunction or together with the de-multiplexed transport payload or data stream or packet), and in response thereto, using and/or based thereon, perform and/or implement error concealment or additional error concealment (relative to any error concealment implemented in the de-multiplexer circuitry).

As such, the de-multiplexer circuitry, in addition to de-multiplexing program packets from the transport data stream, implements error detection or identification, error location and/or concealment, prior to providing such de-multiplexed transport data stream to the video and/or audio decoder circuitry. In addition thereto or in lieu thereof, the de-multiplexer circuitry may provide signals or data that are representative of or characterize the error(s) to the video and/or audio decoder circuitry (or other circuitry) which responsively performs and/or implements error concealment based on or using such error information.

Notably, the present inventions, in certain aspects, may provide a more efficient and effective error detection technique in that certain error detection may be performed based on one or more error enabled/asserted bits and/or flags (for example, the transport error indicator ("TEI") bit asserted in an MPEG-2 environment) set, enabled and/or asserted by baseband processor circuitry in the receiver. In this regard, the one or more error enabled/asserted bits and/or flags may be identified, located and/or determined by parsing the data stream based on, for example, the bit-stream syntax (which may be well defined or understood, standardized and/or proprietary).

Moreover, it should be further noted that implementing the inventions of the present inventions, in certain aspects, may provide for a more efficient approach in that error detection and identification may be performed on a more compressed data stream domain (as compared to the data stream provided to the video and/or audio decoder circuitry). As such, the amount of data to be processed may be less than that of the de-compressed data stream (received by the video and/or audio decoder circuitry). Indeed, the inventions may be implemented using hardware and/or software techniques (and/or combinations thereof) thereby providing the opportunity for a low-cost and flexible design.

With reference to FIGURES 1A and 1B, in one exemplary embodiment, the present inventions are directed to receiver 10 having transport stream de-multiplexer circuitry 12. The transport stream de-multiplexer circuitry 12 includes circuitry and performs techniques to identify selected program stream, and extract and separate audio data streams and/or video data streams from one or more transport data streams. In addition, transport stream de-multiplexer circuitry 12 includes circuitry and performs techniques to (i) detect and/or identify one or more errors in one or more packets of a transport data stream (for example, a MPEG-2 type data stream), (ii) conceal or mask the one or more errors in one or more packets of the transport data stream prior to providing and/or outputting the de-multiplexed transport data stream to video and/or audio decoder circuitry, and/or (iii) generated and/or output signals or data which are representative of or characterize error(s) (for example, characteristics of the error(s)) to, for example, video and/or audio decoder circuitry.

In one embodiment, transport stream de-multiplexer circuitry 12 receives a transport data stream 14 having a header (comprising, for example, a plurality of bytes) and a payload or data load (comprising, for example, a plurality of bytes). The transport data stream 14 typically includes a defined format or data hierarchy of a predefined header and a predefined payload or data load (for example, a MPEG-2 type data stream which is described in detail in/at ISO/IEC 13818, which is attached to the Provisional Application as Attachment 1). Using or based on the definition or characteristics of the transport data stream, transport stream de-multiplexer circuitry 12 identifies the selected program stream, and extracts and separates audio and/or video data streams. In addition, transport stream de-multiplexer circuitry 12 analyzes transport data stream 14 to detect and/or identify one or more errors in one or more packets of a transport data stream (for example, a MPEG-2 type data stream). In certain embodiments, transport stream de-multiplexer circuitry 12 conceals or masks the one or more errors prior to providing and/or outputting the de-multiplexed transport data stream to video and/or audio decoder circuitry. In addition thereto or in lieu thereof, transport stream de-multiplexer circuitry 12 outputs signals or data which are representative of or characterize error(s) (for example, characteristics of the error(s)) to, for example, video and/or audio decoder circuitry. In these embodiments, downstream circuitry may interpret the signals or data which are representative of or characterize the error(s) and, under certain circumstances, conceal or mask one or more errors detected or identified in one or more packets of the transport data stream.

Thus, in operation, transport stream de-multiplexer circuitry 12 may output audio data streams to audio decoder circuitry and video data streams to video decoder circuitry. The transport stream de-multiplexer circuitry 12 may also output information which is representative of or characterize error(s) (for example, characteristics of the error(s)) identified in such data streams to the video and/or audio decoder circuitry (or other circuitry). The video and/or audio decoder circuitry (or other circuitry) may perform and/or implement error concealment based on or using the error information output by the transport stream de-multiplexer circuitry 12. Notably, in a digital broadcasting TV receiver environment, video and audio decoder circuitry decodes and decompresses the corresponding audio and video data streams and video and audio output circuitry provide video and audio rendering functions (using the decoded and decompressed audio and video data streams) to, for example, a user interface (for example, a display and/or a speaker(s)) for corresponding video display and/or audio play-back.

With reference to FIGURES 2A and 2B, in an exemplary digital broadcasting TV receiver environment, receiver 10 may include transport stream de-multiplexer circuitry 12, tuner circuitry 16, baseband processor circuitry 18 and decoder circuitry 20. Briefly, tuner 16 of TV receiver 10 tunes receiver circuitry 10a to, for example, a user selected channel of the frequency band, converts a received RF signal to a baseband signal and outputs the baseband signal to baseband processor circuitry 18. The baseband processor circuitry 18 (which may include channel decoder circuitry) responsively acquires one or more channels (for example, one or more channels which are associated with one or more of the user selected channels) by demodulating and decoding the baseband signal into a transport data stream, and thereafter outputting the transport data stream to transport stream de-multiplexer circuitry 12. The transport stream de-multiplexer circuitry 12 as discussed above, separates the data stream, among other things.

Notably, the present inventions may be implemented in conjunction with any type of tuner circuitry 16 and baseband processor circuitry 18 (including discrete devices or integrated devices), whether now known or later developed. All tuner circuitry 16 and baseband processor circuitry 18, consistent with digital communications outlined herein, are intended to fall within the scope of the present inventions.

With continued reference to FIGURES 2A and 2B, decoder circuitry 20 receives and decompresses or decodes the associated demodulated transport data stream. The decoder circuitry 20 may include audio and/or video decoder circuitry which decompresses the corresponding audio and/or video data streams to perform video and audio rendering operations (using the decompressed audio and video data streams). In addition, as discussed above, decoder circuitry 20 may responsively perform and/or implement error concealment based on or using the error information generated and output by transport stream de-multiplexer circuitry 12. The decoder circuitry 20 may be implemented via a plurality of discrete or integrated logic, and/or one or more state machines, special or general purpose processors (suitably programmed) and/or field programmable gate arrays (or combinations thereof). Further, in those embodiments where transport stream de-multiplexer circuitry 12 does not provide error information to decoder circuitry 20 and/or where decoder circuitry 20 does not employ such error information, the present inventions may be implemented in conjunction with any type of decoder circuitry 20, whether now known or later developed. Under those circumstances, all circuitry (for example, discrete or integrated logic, state machine(s), special or general purpose processor(s) (suitably programmed) and/or field programmable gate array(s) (or combinations thereof)) to decode the coded data streams, consistent with inventions described and/or illustrated herein, are intended to fall within the scope of the present inventions.

As mentioned above, the present inventions may be employed in a satellite, terrestrial and/or cable communications environments (among others) which implements transport stream de-multiplexer circuitry. (See, for example, FIGURE 3A). For example, the present inventions may be implemented in a satellite, terrestrial and/or cable digital television environment and/or receiver (for example, digital broadcasting TV receiver, for example, mobile TV receiver). Moreover, receiver circuitry 10a may output data to user interface 22 (for example, display and/or speaker), processor circuitry 24 (for example, a special purpose or general purpose processor), and/or a recording device (for example, a DVD, hard drive or the like). (See, for example, FIGURES 3B-3G).

With reference to FIGURE 4A, in a detailed exemplary embodiment of transport stream de-multiplexer circuitry 12 which may be employed in a digital TV receiver and/or digital data (video and/or audio) playback devices, transport stream de-multiplexer circuitry 12 may include data buffer(s) 26, data filter circuitry 28, detection and extraction circuitry 30, memory 32, including data buffer(s) 34, and memory access circuitry 36, for example, DMA circuitry. The data buffer(s) 26 may be any memory that buffers the input transport data stream as well as may provide suitable synchronization with certain operations before providing a transport data stream packet to data filter circuitry 28 for processing. The buffer(s) 26 may be integrated or discrete memory of any kind or type, including SRAM, DRAM, latches, and/or registers. All memory types and forms, and permutations and/or combinations thereof, are intended to fall within the scope of the present inventions.

The data filter circuitry 28 receives the transport data stream and filters the data stream to identify certain data contained therein. For example, in the context of MPEG-2, data filter circuitry 28 may analyze (for example, parse) the data stream to identify the packet identifier (PID) as well as determine or identify the transport error indicator ("TEI"). Here, the transport stream de-multiplexer circuitry 12 determines whether the PID value matches at least one of the specified values in a PID filter table, wherein in those situations where the PID value does not match at least one of the specified values in a PID filter table, the packet may be discarded because it is not pertinent to the user/operator and/or the selected channel(s). Notably, in the event that the TEI is asserted/enabled, in one embodiment, transport stream de-multiplexer circuitry 12 may determine the location(s) of the "corrupted" or erroneous slice(s) based on, for example, the slice numbers before and after the transport stream packets that have asserted/enabled TEI bits. As such, the analysis (for example, a parsing operation) of the transport data stream by data filter circuitry 28 may interpret and/or identify the sequence header, the group of picture (GOP) header, the picture header, the slice header, PID values and/or TEI values of the stream.

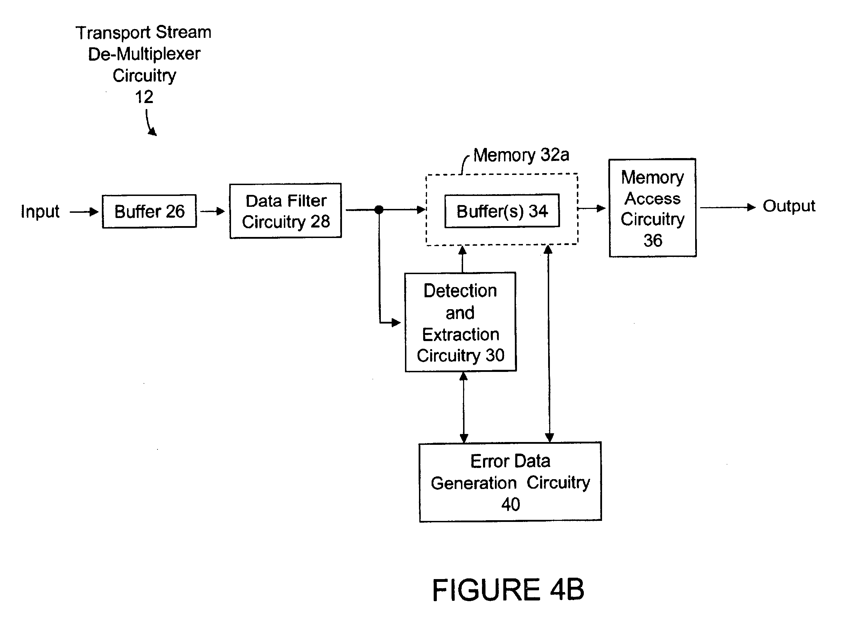

As discussed in more detail below, data filter circuitry 28 of transport stream de-multiplexer circuitry 12 may monitor or count the number of consecutive packets having an asserted/enabled TEI bit or flag. In one embodiment, where data filter circuitry 28 detects a predetermined number of consecutive packets having an asserted/enabled TEI bit or flag (for example, 200 consecutive packets having an asserted TEI bit or flag), transport stream de-multiplexer circuitry 12 may determine, for example, there is a moderate level of channel interference, in which baseband processor circuitry 18 remains locked and TP sync is maintained (i.e., the packet(s) is/are properly synchronized for a given packet of the transport data stream -- that is, no loss of TP sync), error data (for example, data which represents or characterizes the error) may be provided to circuitry in transport stream de-multiplexer circuitry 12 (for example, error data generation circuitry 40). In response, error data generation circuitry 40 (of transport stream de-multiplexer circuitry 12 - see, FIGURE 4B) may evaluate the error data (for example, an additional transport packet which is inserted into transport stream 14 and represents or characterizes the error (for example, the number of asserted consecutively asserted/enabled TEI bits or flags)) and, in response, implement one or more error handling mechanisms.

Notably, a PID filter table may be created, established, maintained and/or defined to specify the PID values that the PID filtering operation employs to compare against the PID value of a transport data stream packet. In one embodiment, thirty-two programmable PID values may be used to filter the transport data stream. A PID index may be associated with each of the thirty-two entries in the PID filter table. As noted above, when enabled, the PID filtering operation discards packets whose PID values do not match any of the PID values specified in the PID filter table.

The data filtering circuitry 28 may be implemented using a plurality of discrete or integrated logic, a state machine, a special or general purpose processor (suitably programmed) and/or a field programmable gate array (or combinations thereof). Indeed, it may be advantageous to implement PID and TEI filtering operations using primarily hardwired logic (for example, hardware acceleration circuitry - a plurality of logic (for example, EX-OR gates) arranged in predetermined configuration) to enhance performance/speed of the filtering operations. All permutations and/or combinations of hardwired and programmable circuitry (which is programmed, for example, via software) for implementing the data filter circuitry are intended to fall within the scope of the present inventions.

The detection and extraction circuitry 30 detects a start code prefix of a packet of the transport data stream (for example, in the context of the MPEG-2 environment or communication, a twenty-four bit binary string "00000000 00000000 00000001"). In one embodiment, upon detecting the start code prefix of a given packet of the transport data stream, detection and extraction circuitry 30 extracts the start code value that follows the start code prefix in the packet. The detection and extraction operations may continue until the entire packet is processed.

Notably, the start code extraction operation may be performed in conjunction with only transport data stream packets that are associated with video related data streams. As such, in this embodiment, in the event the PID value of a given packet of the transport data stream matches or corresponds to that of the video stream, transport stream de-multiplexer circuitry 12 may invoke the start code extraction process for that packet. In the event that the PID value of the given packet does not match or correspond to that of the video stream, the start code extraction operation may not be performed on the packet by detection and extraction circuitry 30.

Similar to data filtering circuitry 28, detection and extraction circuitry 30 may be implemented using a plurality of discrete logic, a state machine, a special or general purpose processor (suitably programmed) and/or a field programmable gate array (or combinations thereof). Indeed, it may be advantageous to implement detection and extraction circuitry 30 using primarily hardwired logic (for example, hardware acceleration circuitry -- a plurality of logic (for example, EX-OR gates) arranged in predetermined configuration) to enhance performance/speed of the filtering operations. All permutations and/or combinations of hardwired and programmable circuitry (which is programmed, for example, via software) for implementing the detection and extraction circuitry are intended to fall within the scope of the present inventions.

The memory 32 (including buffer(s) 34) stores the results of the start code detection and extraction and the demultiplexed packet(s) of the transport data stream. The demultiplexed packet(s) may include a modified format relative to the original format of the transport data stream. For example, in the context of MPEG-2, the original format (see FIGURE 5A) may be modified and stored in memory 32 in a different format (see FIGURE 5B). The demultiplexed portion of the packet(s) having video related data may be provided to, for example, a video decoder and the demultiplexed portion of packet(s) having audio related data may be provided to, for example, an audio decoder. The memory access circuitry 36 facilitates that data transfer of the coded data.

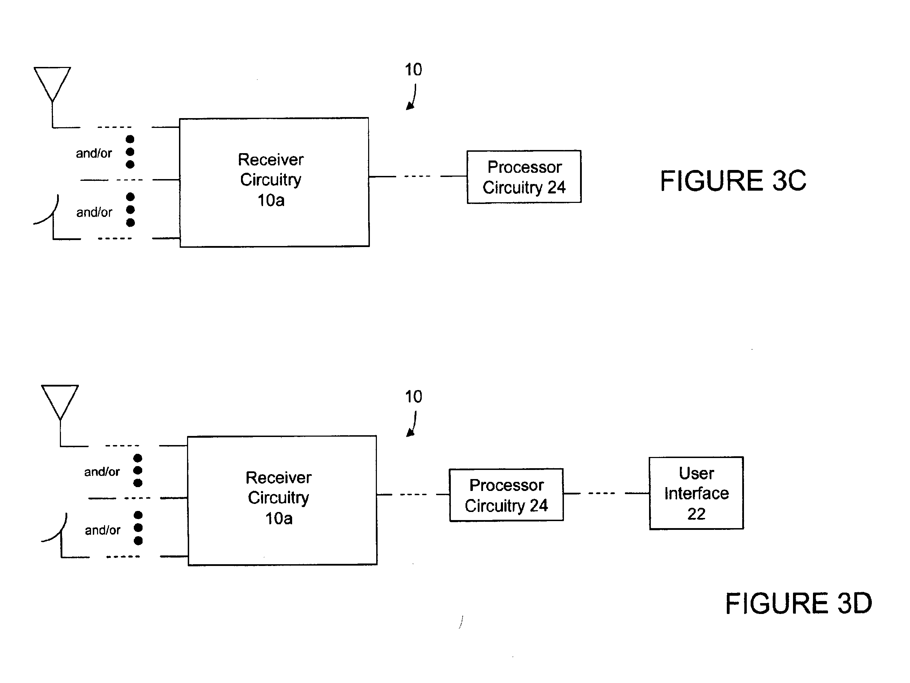

Notably, memory 32 may have a capacity to simultaneously and/or concurrently store and/or maintain a plurality of packets, for example, 100 packets. The memory (including buffer(s) 34) may be integrated or discrete memory of any kind or type, including SRAM, DRAM, latches, and/or registers. All memory types and forms, and permutations and/or combinations thereof, whether now known or later developed, are intended to fall within the scope of the present inventions. Moreover, in those instances where transport stream de-multiplexer circuitry 12 includes memory access circuitry 36, such circuitry 36 may be DMA type circuitry to provide a desired, enhanced and/or appropriate data transfer rate or bandwidth to, for example, decoder circuitry 20 (see, for example, FIGURES 2A and 2B), user interface 22 (see, for example, FIGURE 3B), and/or processor circuitry 24 (see, for example, FIGURES 3C and 3D).

With reference to FIGURE 4B, transport stream de-multiplexer circuitry 12 may include error data generation circuitry 40 to, among other things, generate and output signals or data which are representative of error information or characterize one or more error(s) - for example, the type of error(s), the location of the error(s) (for example, in the context of MPEG-2, locate where the error is in terms of, for example, the macro-block position, slice position and/or picture position in the encoded data stream), and/or the extent of the error(s) (for example, the number of consecutive packets having an asserted/enabled TEI bit or flag and/or the number of consecutive packets having a loss of synchronization (TP sync)). The error data generation circuitry 40 may provide the error information to decoder circuitry 20 which, in response, performs and/or implements error concealment based on or using the error information output by the error data generation circuitry 40.

The error data generation circuitry 40 may be implemented via a plurality of discrete or integrated logic, and/or one or more state machines, special or general purpose processors (suitably programmed) and/or programmable gate arrays (or combinations thereof). Such circuitry may be integrated into other circuitry of transport stream de-multiplexer circuitry 12 or separate therefrom. All circuitry (for example, discrete or integrated logic, state machine(s), special or general purpose processor(s) (suitably programmed) and/or programmable gate array(s) (or combinations thereof)) to generate signals or data which are representative of error information or characterize one or more errors, consistent with inventions described and/or illustrated herein, are intended to fall within the scope of the present inventions.

With continued reference to FIGURE 4B, in one embodiment, transport stream detection and extraction circuitry 30, as discussed above, extracts payload or data load 42 (see, for example, FIGURE 5C) from transport data stream 14 and stores the payload or data load in memory 32a. The payload or data load 42 is the encoded video and/or audio data from transport data stream 14. In addition, error data generation circuitry 40 may generate one or more descriptors 44 which include, among other things, data which is representative of or characterize one or more errors pertaining to an associated payload or data load 42. (See, for example, FIGURES 5D-5J).

In one embodiment, descriptors 44 include one or more error flags or indictors that signify the existence of an error in the associated payload or data load 42. (See, for example, FIGURES 5D-5G). The error flag or indicator may signify that an error exists in a portion of the associated payload or data load 42 (for example, for example, in the context of MPEG-2, in a slice). The one or more error flags or indicators may, in addition thereto or in lieu thereof, signify that the entire associated payload or data load 42 is corrupted, erroneous, and unusable, and/or is not to be decoded by the decoder circuitry.

The descriptors 44, in another embodiment, may include error information/data in addition to, or in lieu of, one or more error flags. (See, for example, FIGURES 5E-5J). The error information/data may provide specific or detailed information pertaining to the error and/or concealment information which the decoder circuitry may employ to address, conceal and/or mask erroneous information in the payload or data load. Such specific or detailed information pertaining to the error may include, for example, (i) characteristics of the error(s) including, for example, the type of error(s), the location of the error(s) (for example, in the context of MPEG-2, locate where the error is in terms of, for example, the macro-block position, slice position and/or picture position in the encoded data stream), and/or the extent or magnitude of the error(s) (for example, the number of consecutive packets having an asserted/enabled TEI bit or flag and/or the number of consecutive packets having a loss of synchronization (TP sync)).

Notably, descriptors 44 may also include management information/data that may be employed by the decoder circuitry to, for example, configure the decoder circuitry or circuitry related thereto. (See, for example, FIGURES 5F and 5H-5J). In addition thereto, or in lieu thereof, the management information/data may control, manage and/or modify the detection, extraction, data storing and/or decoding operations.

The descriptors 44 may be provided, transmitted and/or available to the decoder circuitry simultaneously or concurrently with the associated payload or data load 42, or before or after the associated payload or data load 42 is provided, transmitted and/or available to the decoder circuitry. Moreover, the payload or data load 42 and associated descriptor 44 may be provided to the decoder circuitry in a parallel or serial manner. Notably, all types, forms and/or manners of transmission, and circuitry or configurations therefor, are intended to fall within the scope of the present inventions.

As noted above, error data generation circuitry 40 may be implemented using a plurality of discrete logic, a state machine, a special or general purpose processor (suitably programmed) and/or a field programmable gate array (or combinations thereof). Indeed, it may be advantageous to implement error data generation circuitry 40 using a special or general purpose processor (or controller) to provide flexibility in the event that one or more operations of transport stream de-multiplexer circuitry 12 are changed, updated, enhanced, modified and/or eliminated. All permutations and/or combinations of hardwired and programmable circuitry (which is programmed, for example, via software) for implementing the error data generation circuitry are intended to fall within the scope of the present inventions.

Notably, error data generation circuitry 40 may include or share circuitry with other elements of a system (or components thereof) and/or perform one or more other operations, which may be separate and distinct from the extraction of information from the transport data stream and generation of information that is used by the decoder circuitry. For example, where the error data generation circuitry 40 is implemented via a special or general purpose processor (or controller), such processor or controller may implement or perform the error data generation operations as described herein as well as other operations or functions which may be related to, or separate and distinct from those of transport stream de-multiplexer circuitry 12. For example, where the error data generation circuitry 40 is implemented via a special or general purpose processor (or controller), such special or general purpose processor (or controller) may also be the decoder circuitry and thereby perform the decoding operations, such as the audio decoding operations.

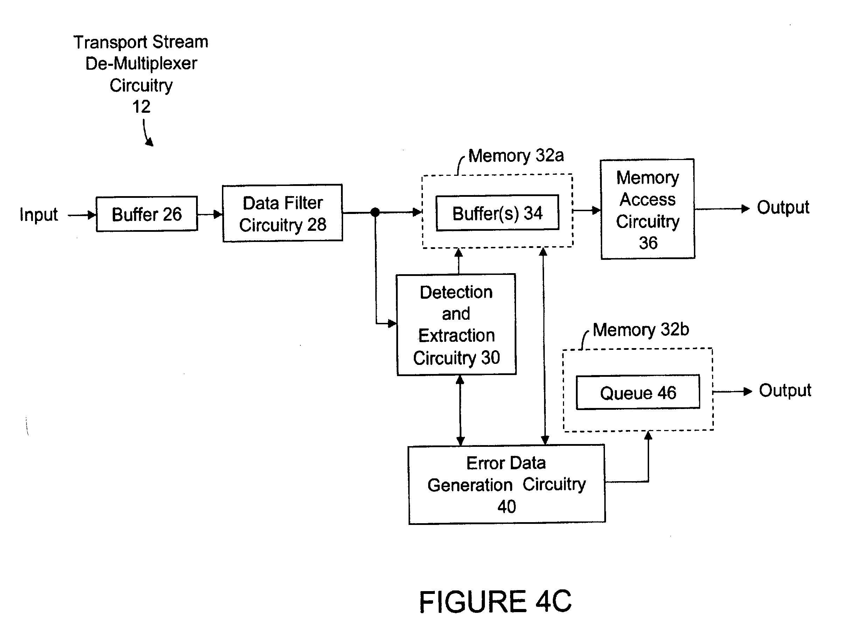

In another embodiment, with reference to FIGURE 4C, transport stream de-multiplexer circuitry 12 includes memory 32b having queue 46 to store one or more descriptors 44 generated or formed by error data generation circuitry 40. The memory 32b may be a discrete or integrated memory. The memory 32b may be a portion of a larger memory (for example, memory 32a and 32b may be the same physical discrete or integrated memory). The memory 32b may be any kind or type of memory, including SRAM, DRAM, latches, and/or registers. All memory types and forms, and permutations and/or combinations thereof, whether now known or later developed, are intended to fall within the scope of the present inventions.

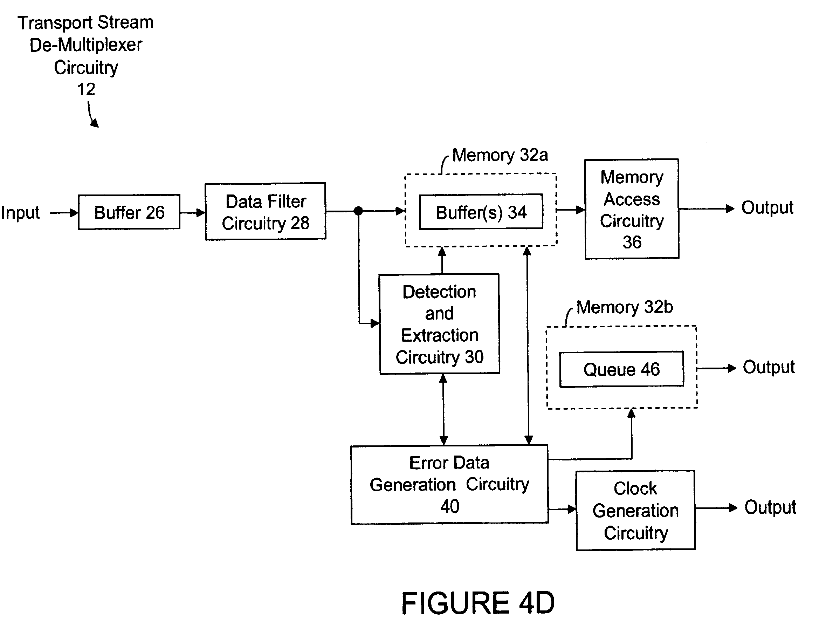

Notably, in another embodiment, transport stream de-multiplexer circuitry 12 includes clock generation circuitry to output clocking information for the decoder circuitry (among other things) to provide or enhance synchronization of operations of transport stream de-multiplexer circuitry 12 and decoder circuitry. (See, for example, FIGURE 4D).

As mentioned above, errors detected by transport stream de-multiplexer circuitry 12 may be addressed, repaired, concealed and/or masked by transport stream de-multiplexer circuitry 12 and/or by decoder circuitry 20 (or circuitry which is supervisory, attendant or concomitant thereto). Indeed, as mentioned above, decoder circuitry 20 may be a portion of a suitably programmed processor. In one exemplary embodiment, when implemented in the environment of MPEG-2 communication, transport stream de-multiplexer circuitry 12 may monitor the picture type (i.e., B-type, I-type or P-type) for each picture as it de-multiplexes the transport data stream. In one embodiment, where the picture is a B-type and the transport data stream or packet includes an erroneous or corrupted slice, transport stream de-multiplexer circuitry 12 may drop or discard the picture rather than attempting to address, repair, conceal and/or mask the error.

However, in the event that an erroneous or corrupted slice is detected in an I-type or P-type picture, transport stream de-multiplexer 12 may generate, provide and/or output data which is representative of the error (for example, characteristics of the error) to decoder circuitry 20. In response to such data, decoder circuitry 20 may address, repair, conceal and/or mask the corrupted slice by, for example, duplicating the slice of the same picture location in a previous picture or frame.

With reference to FIGURES 4A and 6A, in one exemplary embodiment, transport stream de-multiplexer circuitry 12 may detect, identify and/or locate one or more erroneous or corrupted slices in transport data stream 14 (which includes a plurality of successive transport data stream packets ($TS_0$ to $TS_{T+3}$) using the exemplary algorithm illustrated in FIGURE 6B. In this exemplary embodiment, packets in transport data stream 14 include:

- transport stream packet $TS_1$ to $TS_{T+1}$ having TEI that are asserted/enabled (where subscript T is an integer and is $\geq 0$);
- transport stream packets $TS_0$, $TS_{T+2}$, and $TS_{T+3}$ are not asserted/enabled (i.e., deasserted);
- PID values of $TS_0$, $TS_{T+2}$, and $TS_{T+3}$ indicate that such packets are associated with or belong to the same video elementary stream that has been selected to be decoded;
- Slice m starts in $TS_0$ and slice n starts in $TS_{T+3}$;
- $TS_0$ includes a continuity counter cc_0;
- $TS_{T+2}$ includes a continuity counter cc_(T+2); and
- $TS_{T+3}$ includes a continuity counter cc_(T+3).

With the aforementioned in mind, the flowchart of FIGURE 6B provides a data flow diagram for demonstration and exemplary purpose only that illustrates a simplistic exemplary technique for locating erroneous slices based, at least in part, on the continuity counter and TEI flag or bit. In this embodiment, transport stream de-multiplexer circuitry 12 analyzes the input MPEG-2 data stream by parsing the input bit-stream from the transport stream level to slice level. In this embodiment, a time consuming part of the parsing is detection, identification and/or location of the start code prefix and extract start code value of a video elementary stream. As noted above, this process and/or operation may be efficiently implemented in hardware, while the other processes and/or operations may be implemented using a suitably programmed processor or processor-type device. This is particularly the case, for example, for less than 20 MIPS for a transport data stream at a bit rate up to 15 Mbps.

Again, the technique indicated in FIGURE 6B is exemplary process for locating erroneous slices in one or more packets. It is not intended to be limiting in anyway.

The transport stream de-multiplexer circuitry 12, in one embodiment, detects and/or locates one or more errors in an MPEG-2 audio data stream by (i) identifying, detecting and/or obtaining the audio frame length from the header of the packetized audio elementary stream, and thereafter (ii) extracting the audio frame (for example, the complete audio frame) from the transport data stream. The transport stream de-multiplexer circuitry 12 may identify, detect and/or locate the error by correlating or comparing the size of the extracted audio frame and the expected or predetermined frame size. For example, where the size of the extracted audio frame is different from expected frame size, transport stream de-multiplexer circuitry 12 may determine that there is an error in the transport data stream and/or packet thereof.

In the event transport stream de-multiplexer circuitry 12 determines that there is an error in the transport data stream and/or packet thereof, transport stream de-multiplexer circuitry 12 may locate and/or discard the audio frame and substitute an interpolated version of the audio frame which may be based on previous and/or subsequent decoded audio frame(s). In addition thereto, or in lieu thereof, transport stream de-multiplexer circuitry 12 may provide data which is representative of or characterize the error to decoder circuitry 20. Such data may facilitate concealment of the error by decoder circuitry 20 -- for example, by discarding the audio frame and substituting audio data which is an interpolated version determined from previous and/or subsequent decoded audio frame(s).

With reference to FIGURES 4B and 5C, in another exemplary embodiment, transport stream de-multiplexer circuitry 12 may detect, identify and/or locate one or more errors in transport data stream 14 and, in response thereto, generate one or more descriptors 44, each including information which is representative of or characterize the error(s) detected in the associated transport data stream 14. In particular, in one embodiment, error data generation circuitry 40 analyzes input transport data streams 14 to detect errors therein. In response to detecting one or more errors in a given transport data stream 14, error data generation circuitry 40 generates a descriptor having one or more error flags enabled to indicate to the decoder circuitry that the payload or data load of the packet of the transport data stream 14 includes one or more errors therein. (See, for example, FIGURES 5D-5F). As noted above, the error flags may represent or indicate, for example, an error in a portion of the payload or data load 44 corresponding to the packet of transport data stream 14 (for example, in the context of MPEG-2, in a slice). The one or more error flags may, in addition thereto or in lieu thereof, represent or indicate that the entire associated payload or data load 42 is erroneous and is not to be decoded by the decoder circuitry.

The descriptor 44 generated by error generation circuitry 40 may include error information/data which are representative of, for example, characteristics of the error(s) including, for example, the type of error(s), the location of the error(s) (for example, in the context of MPEG-2, locate where the error is in terms of, for example, the macro-block position, slice position and/or picture position in the encoded data stream), and/or the extent of the error(s). In addition thereto, or in lieu thereof, the error information/data may include concealment information or instructions which the decoder circuitry may employ to address, conceal and/or mask erroneous information in the payload or data load.

In one embodiment, descriptors 44 may be stored in one or more queues 46 of memory 32b. (See, for example, FIGURES 4C and 4D). In this embodiment, each descriptor 44 (generated by the error data generation circuitry 40) and its associated coded payload or data load (stored in memory 32a) are available to the decoder circuitry to, for example, facilitate generation and output of uncoded video and/or audio data which is provided, for example, to a user, operator, listener and/or viewer. Indeed, the error data in descriptor 44 may facilitate reduction, minimization, and/or elimination of any adverse impact of the errors in one or more packets of a transport data stream to, for example, a user, operator, listener and/or viewer.

With reference to FIGURE 7A, in one exemplary embodiment in the context of MPEG-2 where the data stream includes video information, error generation circuitry 40 may generate exemplary video descriptor 44a having a picture type field (i.e., "Picture Type", for example, B-type, I-type or P-type), a slice number concealment flag ("SliceCFlag") which, when enabled, reflects that one or more slices of the decoded video data of payload or data load are erroneous, and an access unit concealment flag ("AUCFlag") which, when enabled reflects that some form or type of concealment is to be performed on the entire associated video payload or data load of the packet of the associated transport data stream 14. The video descriptor 44a of this exemplary embodiment further includes a field ("Error Slice Number") which includes information regarding the slice number(s) associated with the slice(s) that are to be concealed by the video decoder.

Notably, in this particular exemplary embodiment, video descriptor 44a also includes the access unit start address ("AU Start Address") which is representative of the starting address of the associated decoded video payload or data load in memory 32a. The video descriptor 44a of this embodiment also includes access unit byte length ("AU Byte Length") which is representative of the length of the associated decoded video payload or data load in memory 32a.

With reference to FIGURE 7B, where the data stream includes audio information, in one exemplary embodiment in the context of MPEG-2, error generation circuitry 40 may generate exemplary audio descriptor 44b having an access unit concealment flag ("AUCFlag") which, when enabled reflects that some form or type of concealment is to be performed on the associated audio payload or data load. The audio descriptor 44b of this exemplary embodiment also includes the access unit start address ("AU Start Address") which is representative of the starting address of the associated decoded audio payload or data load in memory 32a, and access unit byte length ("AU Byte Length") which is representative of the length of the associated decoded audio payload or data load in memory 32a.

Notably, fields "DTS and "PTS" may be employed by the decoder circuitry for, among other things, synchronization of operations in the decoder circuitry and/or between the decoder circuitry and transport stream de-multiplexer circuitry. Further, "Descriptor Terminating Word" is a data sequence or word that indicates the end of a descriptor or descriptor packet.

The exemplary descriptors 44a and 44b illustrated in FIGURES 7A and 7B are provided for exemplary purposes only and, unless expressly stated, are not intended to be limiting in anyway. Indeed, descriptor 44 may be comprised of more or less fields including more or less information/data, respectively. All field combinations and permutations of generating and/or providing signals or data which are representative of error information (for example, characteristics of the error including, for example, the type of error, the location of the error, and/or the extent of the error), to video and/or audio decoder circuitry, whether in the context of MPEG-2 or not, are intended to fall within the scope of the present inventions.

Notably, with reference to FIGURE 7A and 7B, in the event that no errors are detected or identified in a given transport data stream, the error flags or indicators of the descriptors associated with the decoded payload or data load of the transport data stream are disabled and, as such, the decoder circuitry decodes the coded payload or data load without implementing concealment. In this exemplary embodiment, however, in the event an error is detected in a given packet of the transport data stream, one or more of the error flags or indicators of the descriptors associated with the decoded payload or data load of the packet of the transport data stream are enabled, thereby informing or instructing the decoder circuitry to implement one or more error concealment processes.

The error data generation circuitry 40 of the transport stream de-multiplexer circuitry 12 of the present inventions (see, for example, FIGURE 4C) may detect and/or identify many different types of errors in the transport data stream. In one exemplary embodiment, error data generation circuitry 40 may detect and/or identify different types of errors in one or more packets of an MPEG-2 type transport data stream including, for example, one or more packets having the following conditions or characteristics:

(1) the packet is not properly synchronized (that is, there is a loss of TP Sync for a given packet of the transport data stream) for a predetermined period of time (notably, TP Sync loss is typically indicated by the channel decoder which may indicate a situation that causes the channel decoder to enter into re-acquisition state)

(2) the packet is properly synchronized (that is, TP Sync is maintained), however, the TEI bit is asserted (typically indicating that the error correction is beyond the capability of the forward error correction decoder in the channel decoder), and no discontinuity of the continuity counter is detected;

(3) the packet is properly synchronized (that is, TP Sync is maintained), one or more data packets include packet identifications (PIDs) having a discontinuity detected in the continuity counter (which may be, for example, due to a packet having a TEI flag asserted, or TP sync loss with the number of lost packets not exceeding the threshold for determining a TP sync loss (notably, the threshold is typically set to five, indicating a certain number of packet losses)).

In the event that baseband processor circuitry 18 (for example, the channel decoder circuitry) detects a loss of TP Sync for a given packet of the transport data stream (Situation 1), with reference to FIGURES 2A, 2B, 4B-4D, 5A-5J, 7A and 7B, receiver circuitry 10a determines that the received signal is, for example, too weak or channel interference is too strong, and the received data will not be written into buffers 26. In one embodiment, the input transport data stream provided to transport stream de-multiplexer circuitry 12 may include one or more special packets (for example, a packet having a PID = 0x1 FFF, which may represent a NULL packet PID and payload_unit_start_indicator (PUSI) is enabled; notably, a "normal" null packets, PUSI is set to 0). Here, however, baseband processor circuitry 18 (for example, the channel decoder circuitry) may generate a loss of TP sync signal to transport stream de-multiplexer circuitry 12 which then creates the special NULL packet and output the special NULL packet into transport stream buffer 34. As such, during the period of time in which there is a loss of synchronization, the baseband processor circuitry 18 (for example, the channel decoder circuitry) does not write the transport data stream into buffer 26 of transport stream de-multiplexer circuitry 12, but resumes after synchronization is established or reestablished.

Notably, in an alternative embodiment, baseband processor circuitry 18 (for example, the channel decoder circuitry) may create the special NULL packet and output the special NULL packet, rather than the decoded data from the received transport data stream, to transport stream de-multiplexer circuitry 12. As such, in this embodiment, during the period of time in which there is a loss of synchronization, baseband processor circuitry 18 (for example, the channel decoder circuitry) does not write the transport data stream into buffer 26 of transport stream de-multiplexer circuitry 12, but resumes after synchronization is established or reestablished.

The baseband processor circuitry 18 may "count" the number of consecutive packets having a loss of synchronization. In one embodiment, where the number of consecutive packets have lost synchronization exceeds a predetermined number or value, baseband processor circuitry 18 may enable or generate a flag and provide such flag to transport stream de-multiplexer circuitry 12, for example, on a dedicated signal line. (See, for example, "error data line(s)" in FIGURE 2B). In another embodiment, the actual number of consecutive packets having lost synchronization may be provided to transport stream de-multiplexer circuitry 12, for example, on such a dedicated signal line. As discussed herein, transport stream de-multiplexer circuitry 12 may employ such information (for example, the flag or actual number of consecutive packets having lost synchronization) in determining and/or assessing the manner of handling loss of synchronization error.

The transport stream de-multiplexer circuitry 12 analyzes the input and detects the special NULL packet from transport stream buffer 34. In response, error data generation circuitry 40 generates a descriptor that reflects, indicates and/or characterizes an error in the packet and that concealment is to be performed on the associated video payload or data load of the associated packet of the transport data stream 14. In one exemplary embodiment, error data generation circuitry 40 generates a descriptor for the associated video and/or audio payload or data load, having the access unit concealment flag ("AUCFlag") enabled (set to 1). (See, for example, the exemplary video descriptor of FIGURE 8A and the exemplary audio descriptor of FIGURE 10).

The video and/or audio decoder circuitry reads the descriptor (for example, the descriptor having an enabled access unit concealment flag) and implements one or more error concealment techniques for the associated video and/or audio payload or data load. For example, in one exemplary embodiment in the context of MPEG-2 where the payload or data load is video data/information and current picture is an I-type or P-type picture, and the previous picture was an I-type or P-type picture which was decoded without error or with slice concealment, the video decoder "copies" the previous I-type or P-type picture into a reference frame buffer/memory that stores the reconstructed picture for current I-type or P-type picture. Accordingly, when it is time to display the "current" I-type or P-type picture, (i) the previously displayed B-type picture is "repeated" or redisplayed in place of or as a substitute for the I-type or P-type picture where the previously displayed B-type picture has been decoded "normally", or (ii) the previous I-type or P-type picture is "repeated" or re-displayed in place of or as a substitute for the current I-type or P-type picture.

In the event that the current picture is a B-type, and the previous picture was a B-type picture, the decoder circuitry "repeats" or re-displays the previous B-type picture in place of or as a substitute for the current B-type picture via access of a backward reference picture buffer/memory. Where, however, the current picture is a B-type, and the previous picture was an I-type or a P-type picture, the decoder circuitry displays the data stored in a forward reference picture buffer/memory, which contains a complete picture, in place of or as a substitute for the current B-type picture.

Notably, in each instance, in this embodiment, the video decoder circuitry may implement a predetermined concealment technique(s) or operation(s) in response to the error information (for example, contained in the descriptor or descriptor packet) which is generated and/or provided by transport stream de-multiplexer circuitry 12.

In one embodiment, in the event that baseband processor circuitry 18 (for example, the channel decoder circuitry) detects a loss of lock of the signal reception (for example, the RF input signal is too weak or channel interference is too strong), baseband processor circuitry 18 may enable or generate a loss of lock flag and provide such flag to transport stream de-multiplexer circuitry 12, for example, on a dedicated signal line. (See, for example, "error data line(s)" in FIGURE 2B). In response, transport stream de-multiplexer circuitry 12 may employ such information (for example, the loss of lock flag) in determining and/or assessing the manner of handling loss of synchronization error.

With continued reference to FIGURES 2, 4B-4D, 5A-5J and 7A, in the event that the TEI bit is asserted (Situation 2 -- for example, when the channel decoder detects a situation in which more than eight error bytes are contained in the currently decoded transport data stream packet), error data generation circuitry 40 detects the asserted TEI bit and generates a descriptor that reflects that concealment is to be performed on the associated video payload or data load of the associated packet of transport data stream 14. In one exemplary embodiment in the context of the MPEG-2 environment, error data generation circuitry 40 may implement the exemplary algorithm of FIGURE 9 to generate an appropriate descriptor or descriptor packet. In this regard, when transport stream de-multiplexer circuitry 12 reads a packet of transport data stream 14 from data buffer 26 having an asserted or enabled TEI bit (set to 1), transport stream de-multiplexer circuitry 12 may inform error data generation circuitry 40 of the current slice number (SliceNum) and discard the payload of the current packet of transport data stream 14 with the asserted or enabled TEI bit. The error data generation circuitry 40 may then implement the exemplary algorithm of FIGURE 9 to generate an appropriate descriptor or descriptor packet. That is, after discarding the payload of the current packet of transport data stream 14 (which included a packet having an asserted or enabled TEI bit), error data generation circuitry 40, in one exemplary embodiment, reads the next packet of transport data stream 14 from data buffer 26.

● In the event that such next packet is special in that it indicates a loss of synchronization (for example, the TEI bit is disabled (set to 0), PID = 0x1FFF, and payload_unit_start indicator (PUSI) is enabled (set to 1)), error data generation circuitry 40 may implement the TP sync loss processing of Situation 1, discussed in detail above.

● In the event that such next packet includes a disabled TEI bit (set to 0), PID equal to VPID, and the continuity_counter (CC) is continuous to the last correctly received packet of transport data stream 14, error data generation circuitry 40 may determine that the video payload or data load associated with the packet of transport data stream 14 is not affected by the erroneous packet, and the packet may be parsed into decoded video payload or data load and stored in memory 32a for use by the video decoder circuitry.

● Otherwise, in the event that such next packet includes a disabled TEI bit (set to 0), an enabled paload_unit start_indicator (PUSI) (set to 1), PID equal to VPID, a discontinuous continuity_counter (CC) relative to the last correctly received packet having video information, and an expected picture temporal_reference code, error data generation circuitry 40 determines that the proceeding erroneous, corrupted or bad packet includes coded video data that covers all the slices (from the currently recorded slice to the last slice) which are to be concealed at the slice level. Under these circumstances, the slice numbers of the corresponding erroneous slices are incorporated into the associated or corresponding descriptor (for example, in the "Error Slice Number" field). In that way, the decoder circuitry, in response to analyzing the descriptor, conceals the slices of the associated coded video payload or data load which is stored in memory 32a. As noted above, the associated or corresponding descriptor generated by error data generation circuitry 40 may be stored in memory 32b (for example, in queue 46).

● Otherwise, in the event that such next packet includes a disabled TEI bit (set to 0), a disabled paload_unit_start_indicator (PUSI) (set to 0), PID equal to VPID, and a discontinuous continuity_counter (CC) relative to the last correctly received packet having video data/information, the search for the next slice number in the packet is invoked. Where one or more slice numbers are contained in the packet, all the slices from SliceNum to the first slice number found in the packet are incorporated into the associated or corresponding descriptor (for example, in the "Error Slice Number" field); otherwise, the payload or data load of packet is discarded or dumped. Again, in that way, the decoder circuitry, in response to analyzing the descriptor, conceals the slices of the associated coded video payload or data load pertaining to the slices of the slice number incorporated in the descriptor.

● Otherwise, in the event that such next packet includes an asserted TEI bit (set to 1), the payload of this packet is discarded or dumped, and numTEIAsserted count is incremented.

As mentioned above, transport stream de-multiplexer circuitry 12 may monitor and/or count the number of consecutive packets having an asserted/enabled TEI bit or flag. For example, in one embodiment, transport stream de-multiplexer circuitry 12 may detect a predetermined number of consecutive packets having an asserted/enabled TEI bit or flag (for example, 200 consecutive packets having an asserted TEI bit or flag) and determine, for example, there is a moderate level of channel interference, in which baseband processor circuitry 18 remains lock (i.e., no loss of reception or signal lock) and TP sync is maintained (i.e., no loss of TP Sync), data may be generated which represents or characterizes the error (for example, the number of asserted consecutively asserted/enabled TEI bits or flags). Such data may be provided to other circuitry in transport stream de-multiplexer circuitry 12 (for example, error data generation circuitry 40) which may responsively implement one or more error handling mechanisms to address, mask and/or conceal the errors.

The data may be provided via an additional transport packet or a descriptor packet which may be inserted into transport data stream 14 representing or characterizing the error (for example, the number of asserted consecutively asserted/enabled TEI bits or flags) or communicated separately therefrom. In one embodiment, where data filter circuitry 28 detects or determines 200 consecutive packets having an asserted TEI bit or flag and transport stream de-multiplexer circuitry 12 determines baseband processor circuitry 18 remains locked (i.e., no loss of reception or signal lock) and TP sync is maintained (i.e., no loss of TP sync), data may be generated which represents or characterizes the error (for example, the number of asserted consecutively asserted/enabled TEI bits or flags) may be as follows:

$$\{0x47, 0x1f, 0xff, 0x30, 0x03, 0x00, \mathit{0x00, 0xc8}, 189\{8'h0\}\}.$$

Thus, in this embodiment, data filter circuitry 28 of transport stream de-multiplexer circuitry 12 monitors or detects the TEI value for each in-coming packet of the transport data stream. Where transport stream de-multiplexer circuitry 12 detects TEI bit or flag is enabled (1'b1) for a specific packet, transport stream de-multiplexer circuitry 12 increments a counter numTeiAsserted, discards the corresponding packet; otherwise, transport stream de-multiplexer circuitry 12 processes the packet in the normal manner. The data filter circuitry 28 may implement such functions using, for example, the pseudo-code of:

● SyncByte = 8'h47;
● TEI =1'b0;
● PUSI =1'b0;
● Priority = 1'b0;
● PID = 13'h1FFF;
● TSC = 2'b00;
● AFC=2'b11;
● CC=4'h0;
● AFL=8'h3 (3 bytes of adaptation field);

● Adaptation_field = {8'h0, 16'hxxxx}, where 16'hxxxx specifies the number of consecutive TEI asserted packets of the transport data stream, if overflow, set to be maximum value 16'hffff;
● Payload = {189{8'h00}}, due to 9 extra bytes appended at the end of the packet before writing into memory in de-multiplexer circuitry 12.

Notably, where error data generation circuitry 40 detects that one or more slices of the associated coded video includes errors (in this exemplary video descriptor, Slices one, two and four), error data generation circuitry 40 may generate the exemplary video descriptor of FIGURE 8B, which reflects that the decoder circuitry is to implement concealment with respect to Slices one, two and four.

In response to receiving and parsing the exemplary video descriptor of FIGURE 8B, the video decoder circuitry determines that at least one slice is to be concealed -- and in this example, Slices one, two and four. The video decoder circuitry implements the concealment process with respect to Slices one, two and four. In particular, the video decoder circuitry reads the video descriptor of FIGURE 8B and, in response, implements one or more error concealment techniques for the associated video payload or data load. For example, in one exemplary embodiment in the context of MPEG-2 where the current picture is an I-type or P-type picture, the video decoder "duplicates" or re-displays the corresponding co-located slice(s) in a backward reference picture buffer in place of or as a substitute for the to-be-concealed slice(s).

In one exemplary embodiment in the context of MPEG-2 where the current picture is a B-type picture, the video decoder determines whether the previous picture was (i) an I-type or P-type picture, and "duplicates" or re-displays the corresponding co-located slice(s) in a forward reference picture buffer in place of or as a substitute for the to-be-concealed slice(s) or (ii) a B-type picture, and "duplicates" or re-displays the corresponding co-located slice(s) in the backward reference picture buffer that will be duplicated for the to-be-concealed slice(s). Accordingly, in this exemplary embodiment, when it is time to display the I-type or P-type picture, the corresponding co-located slice(s) of the previous picture or in the backward reference picture buffer is "duplicated" or redisplayed in place of or as a substitute for the to-be-concealed slice(s). However, where the current picture is a B-type picture, and (i) the previous picture is an I-type or P-type picture, the corresponding co-located slice(s) of the previous picture or in the forward reference picture buffer are "duplicated" or redisplayed in place of or as a substitute for the to-be-concealed slice(s), or (ii) the previous picture is a B-type picture, the corresponding co-located slice(s) in the backward reference picture buffer are "duplicated" or redisplayed in place of or as a substitute for the to-be-concealed slice(s).

Notably, in each instance, in this embodiment, the video decoder circuitry implements the predetermined concealment technique(s) or operation(s) in response to the error information (for example, contained in the descriptor or descriptor packet) which is generated and/or provided by de-multiplexer circuitry 12.

In the event that error data generation circuitry 40 detects or determines a discontinuity of the continuity_counter of a coded video data packet (Situation 3), with continued reference to FIGURES 4B-4D, 5 and 7A, such discontinuity may be associated with either a loss of synchronization of the packet of transport data stream 14 or a packet having an asserted TEI bit (set to 1). Thus, in the event that error data generation circuitry 40 detects or determines a discontinuity of the continuity_counter, error data generation circuitry 40 may implement Situation 1 or Situation 2 discussed in detail above. For the sake of brevity, such discussions will not be repeated.

In another embodiment, where receiver circuitry or receiver device is implemented in a mobile DTV reception environment, it may be advantageous to detect certain errors or potential errors in the baseband processor circuitry (for example, the channel decoder), which may be provided to the transport stream de-multiplexer circuitry. Thereafter, the transport stream de-multiplexer circuitry, as discussed herein, may address and/or implement concealment or masking techniques and/or generate descriptors or descriptor packets to be provided to decoder circuitry (for example, MPEG compliant decoder). For example, it may be advantageous to detect a loss of TP sync (i.e., the synchronization status of the packet(s) of the transport data stream) and input signal lock condition (i.e., whether there is a loss of lock of the signal reception -- for example, the RF input signal is too weak or channel interference is too strong) in the baseband processor circuitry and output signals representative thereof to the transport stream de-multiplexer circuitry.

With reference to, for example, FIGURES 1B, 1C, 2B, 4B-4D, 5C-5J, 11A-11E, 12A, 12B, 13A and/or 13B, in one embodiment, digital broadcasting TV receiver circuitry 10a may implement techniques of detection, concealment and/or masking of errors under the following conditions::

1. TP sync is maintained, but some individual packets of the transport data stream have TEI flags or bits asserted thereby indicating an error in the packet (for example, the error situation is beyond the capability of the decoder (for example, a Reed-Solomon decoder); in this situation, continuity_counter (CC) may be discontinuous due to error(s) in certain packet(s) of the transport data stream as indicated by the assertion of TEI flag or bit;

2. Loss of TP sync may be detected by baseband processor circuitry 18 (for example, channel decoder or descrambler circuitry therein; here, although there is a loss TP sync, baseband processor circuitry 18 has not necessarily experienced a loss of lock. In one embodiment, where the number of consecutive packets have lost synchronization exceeds a predetermined number or value, baseband processor circuitry 18 may enable or generate a flag and provide such flag to transport stream de-multiplexer circuitry 12, for example, on a dedicated signal line. (See "error data line(s)" in FIGURE 2B). In another embodiment, the actual number of consecutive packets having lost synchronization may be provided to transport stream de-multiplexer circuitry 12, for example, on such a dedicated signal line.

Notably, in one embodiment, the loss of TP sync signal is an active high signal, with its active duration being a clock cycle. In one embodiment, the loss of TP sync signal is asserted when the logic in the channel decoder or descrambler circuitry (for example, state machine) of the circuitry 18 transitions from input signal tracking to input signal acquisition.

3. Loss of lock is detected by baseband processor circuitry 18. In one embodiment, in the event that baseband processor circuitry 18 (for example, the channel decoder circuitry) detects a loss of lock of the signal reception (for example, the RF input signal is too weak or channel interference is too strong), processor circuitry 18 may enable or generate a loss of lock flag and provide such flag to transport stream de-multiplexer circuitry 12, for example, on a dedicated signal line. (See "error data line(s)" in FIGURE 2B).

Notably, in one embodiment, the signal or data which indicates loss of lock is an active high level signal, which means that if loss of lock is detected, baseband processor circuitry 18 generates and outputs a logic high ("1"), which may be maintained until processor circuitry 18 re-gains lock.

The following table summarizes error cases and responsive error handling techniques implemented by transport stream de-multiplexer circuitry 12 in connection with loss of lock, loss of TP sync and TEI error signals or data.

| Error Cases | Loss of Lock | Loss of TP Sync | TEI | Comments |
|---|---|---|---|---|
| 0 | 0 | 0 | 0 | No Error |
| 1 | 0 | 0 | 1 | If CC is continuous, then NO affection on current program; otherwise Error Handling Mechanism ("EHM") 0 is triggered for slice level error concealment. |
| 2 | 0 | 1 | 0 | EHM0 is triggered for slice level error concealment. |
| 3 | 0 | 1 | 1 | EHM0 is triggered for slice level error concealment. |
| 4 | 1 | 0 | 0 | EHM1 is applied for picture level error concealment. |
| 5 | 1 | 0 | 1 | EHM1 is applied for picture level error concealment. |
| 6 | 1 | 1 | 0 | EHM1 is triggered for picture level error concealment. |
| 7 | 1 | 1 | 1 | EHM1 is triggered for picture level error concealment. |

EHM0 refers to slice level error handling mechanism which, after detecting and locating the error affected part or portion within a certain slice of a picture or frame, in one embodiment, includes starting or triggering the search for the next slice start code and marking, identifying and/or indicating the affected slice(s) to be concealed. In this EHM, the affected picture area is normally limited to be within a slice or multiple slices.

EHM1 refers to picture level error handling mechanism which, after detecting and locating the error affected part or portion within a picture or frame, it is determined that the error situation is severe (which may affect multiple pictures), in one embodiment, includes starting or triggering the search for the next picture start code, and marking, identifying and/or indicating the affected slice(s) of a picture or the whole affected picture to be concealed. In this EHM, the affected part on a video sequence may affect or span multiple (for example, consecutive) pictures or frames.

Notably, where loss of lock is not indicated, detected, declared and/or enabled, and loss of TP sync is indicated, detected, and/or enabled but memory 32a does not contain video data or frames and/or has been empty for a predetermined period of time, based on the error cases and responsive error handling techniques of the table above, transport stream de-multiplexer circuitry 12 may implement Error Handling Mechanism ("EHM") 0 at slice level concealment, which may present an issue in the event that multiple pictures are "corrupted". In that situation, error data generation circuitry 40 may implement EHM1 (or switch from EHM0 to EHM1) for picture level concealment. To facilitate detection of this situation, transport stream de-multiplexer circuitry 12 may include circuitry (for example, a count-down or count-up counter) to monitor and/or detect the "fill" state of memory 32a in the context of video data or frames. Such circuitry may be implemented in memory 32a.

Upon receipt of loss of lock and/or loss of TP sync signals or data, transport stream de-multiplexer circuitry 12 may:

1. Detect whether loss of lock signal/data is asserted before writing packets of the transport data stream value into memory 32a.

2. Whenever detecting the assertion of loss of TP sync signal/data, transport stream de-multiplexer circuitry 12 may generate a packet with TEI=1'b0, PUSI=1, PID=0x1FFF, AFC=2'b01, CC=4'h0, and then assert a predetermined bit of the packet before writing the packet into memory 32a. In one embodiment, the payload of this packet is 184 bytes of 0x00.

3. Circuitry in transport stream de-multiplexer circuitry 12 monitors the state of "fill" of memory 32a (in the context of video data or frames). Notably, where counter circuitry is employed, after the count goes to a predetermined value, an interrupt line may be asserted to alter the system to the condition. As noted above, such counter circuitry may count down or up. Moreover, circuitry in transport stream de-multiplexer circuitry 12 may provide a responsive interrupt status request which configures or programs transport stream de-multiplexer circuitry 12 into the correct EHM mode.

Notably, where data generation circuitry 40 detects or determines an error in one or more coded audio packets or frames, for each corrupted or erroneous coded audio packet or frame, data generation circuitry 40 generates an audio descriptor indicating an error in the coded audio pack or frame. In response, the audio decoder circuitry implements concealment techniques with respect to such one or more coded audio packets or frames.

In one exemplary embodiment, error data generation circuitry 40 generates an audio descriptor for the associated coded audio payload or data load having an enabled access unit concealment flag ("AUCFlag"). (See, for example, FIGURE 10). The audio decoder circuitry reads the audio descriptor (for example, the descriptor having an enabled access unit concealment flag ("AUCFlag")) and implements one or more error concealment techniques for the associated audio payload or data load. For example, in one exemplary embodiment in the context of MPEG-2 where the payload or data load is coded audio data/information, the audio decoder determines:

● if the access unit concealment flag ("AUCFlag") is asserted (set to 1) for the current audio frame, and the previous audio frame was decoded normally with AUCFlag de-asserted or not asserted (set to 0), and outputs or "duplicates" the previous audio for current audio frame by, for example, outputting the audio output buffer again;

● otherwise, if the access unit concealment flag ("AUCFlag") is asserted (set to 1) for the current audio frame and the previous audio frame, and outputs a scaled version of the audio data (for example, the audio output buffer is again output wherein with each pulse code modulated (PCM) value is divided by $2^N$, where N is initially set to one, and incremented by one each time this situation is presented. In this way, a "soft mute in" effect may be implemented based on the exemplary concealment process/technique;

● otherwise, if the access unit concealment flag ("AUCFlag") is de-asserted or not asserted (set to 0) for current audio frame, and the previous audio frame was decoded with AUCFlag asserted (set to 1), and outputs another scaled version of the audio data (for example, the audio output buffer is output wherein with each PCM value is divided by $2^{(N-1)}$, where N is decremented by 1);

● otherwise, the access unit concealment flag ("AUCFlag") is de-asserted or not asserted (set to 0) for the current audio frame, and the previous audio frame was decoded normally with AUCFlag de-asserted or not asserted (set to 0),

o and whether N != 0, wherein the audio output buffer will be output with each PCM value divided by $2^{(N-1)}$, and N will be decremented by ,1

∘ otherwise, the audio output buffer will be output without any change.

In sum, the exemplary audio concealment techniques described above may provide a "soft mute in" effect in the event of an error in the audio transport data stream.

Notably, the three situations discussed above with respect to errors in the video related data may be characterized as typical errors that may be experienced in the mobile TV reception environment, among others. Indeed, in the mobile TV reception environment, one or more of these three situations (including various combinations thereof) may be expected in a typical reception environment -- in between periods of acceptable, strong or good reception.

As noted above, the error data generation circuitry of the transport stream de-multiplexer circuitry of the present inventions may detect and/or identify many different types of errors in the transport data stream. Indeed, all such errors are intended to fall within the scope of the present inventions.

Under those circumstances where transport stream de-multiplexer circuitry 12, in addition to outputting a de-multiplexed transport data stream, outputs signals or data which are representative of error information (for example, characteristics of the error(s) including, for example, the type of error(s), the location of the error(s), and/or the extent of the error(s)) (for example, the number of consecutive packets having an asserted/enabled TEI bit or flag and/or the number of consecutive packets having a loss of synchronization (TP sync)) to decoder circuitry 20, including video decoder circuitry 20a and/or audio decoder circuitry 20b. (See, for example, FIGURES 11A-11E). In these embodiments, video and audio decoder circuitry 20a and 20b, respectively, receive the demultiplexed transport data stream on signal lines 38a and 38b, respectively, and the signals or data which are representative of error information or characterize the error on signal lines 38c. The video and/or audio decoder circuitry 20a and 20b, respectively, may interpret the signals or data which are representative of error information (or characterize the error) and, under certain circumstances, address, conceal and/or mask the one or more errors in one or more packets of the data stream, for example, based on or using such signals or data.

The video and/or audio decoder circuitry 20a and 20b, respectively, may be a plurality of discrete or integrated logic, a state machine, a special or general purpose processor (suitably programmed) and/or a field programmable gate array (or combinations thereof). Further, in those embodiments where transport stream de-multiplexer circuitry 12 does not provide error information to video and/or audio decoder circuitry 20a and 20b, respectively and/or where such decoder circuitry does not employ such error information, the present inventions may be implemented in conjunction with any type of video and/or audio decoder circuitry, whether now known or later developed. Under those circumstances, all circuitry (for example, discrete or integrated logic, a state machine, a special or general purpose processor (suitably programmed) and/or a field programmable gate array (or combinations thereof)) to decode the data streams, consistent with inventions described and/or illustrated herein, are intended to fall within the scope of the present inventions.

Notably, transport stream de-multiplexer circuitry 12 according to the present inventions may include additional circuitry and implement additional operations/processes. For example, with reference to FIGURES 12A and 12B, transport stream de-multiplexer circuitry 12 may include interrupt circuitry 48. Further, with reference to FIGURE 12B, transport stream de-multiplexer circuitry 12 may include registers 50. Briefly, interrupt circuitry 48 may provide for polling and/or interrupt operations to inform internal circuitry and/or external circuitry (for example, processor circuitry 24) whether certain events occur. The registers 50 may, among other things, store information which is representative of memory mapped input/output (MMIO). This information may facilitate expeditious data transfer, for example, from transport stream de-multiplexer circuitry 12 to bus 40 and/or processor circuitry 24.

There are many inventions described and illustrated herein. While certain embodiments, features, attributes and advantages of the inventions have been described and illustrated, it should be understood that many others, as well as different and/or similar embodiments, features, attributes and advantages of the present inventions, are apparent from the description and illustrations. As such, the embodiments, features, attributes and advantages of the inventions described and illustrated herein are not exhaustive and it should be understood that such other, similar, as well as different, embodiments, features, attributes and advantages of the present inventions are within the scope of the present inventions.

For example, transport stream de-multiplexer circuitry 12, according to the present inventions, may electrically couple to decoder circuitry 20 and/or processor circuitry 24 which is electrically coupled to user interface 22 (for example, display and/or speaker) in a point to point manner (see FIGURES 13A and 13C) or electrically couple to processor circuitry 24 via a shared bus 40 (see, for example, FIGURES 13B and 13D). Notably, in this embodiment, decoder circuitry 20 may substitute for processor circuitry 24 and/or decoder circuitry 20 may be disposed in processor circuitry 24.

A system implementing the transport stream de-multiplexer circuitry 12 according to the present inventions may include additional circuitry and implement additional operations/processes. For example, with reference to FIGURES 14A and 14B, the system may include memory 54, coupled to decoder circuitry 20 and/or transport stream de-multiplexer circuitry 12 to facilitate suitable rendering of the audio and video data streams to, for example, a user interface (for example, a display and/or a speaker(s)) for corresponding video display and/or audio play-back.

Importantly, the present inventions are neither limited to any single aspect nor embodiment thereof, nor to any combinations and/or permutations of such aspects and/or embodiments. Moreover, each of the aspects of the present inventions, and/or embodiments thereof, may be employed alone or in combination with one or more of the other aspects of the present inventions and/or embodiments thereof. For the sake of brevity, many of those permutations and combinations are not discussed separately herein.

As such, the above embodiments of the present inventions are merely exemplary embodiments. They are not intended to be exhaustive or to limit the inventions to the precise circuitry, techniques, and/or configurations disclosed. Many modifications and variations are possible in light of the above teaching. It is to be understood that other embodiments may be utilized and operational changes may be made without departing from the scope of the present inventions. As such, the foregoing description of the exemplary embodiments of the inventions has been presented for the purposes of illustration and description. Many modifications and variations are possible in light of the above teaching. It is intended that the scope of the inventions not be limited solely to the description above.

Further, although exemplary embodiments and/or processes have been described above, at times, in the context of MPEG-2, the inventions described and/or illustrated herein may also be implemented in conjunction with other coded communications. As such, the discussions in the context of MPEG-2 are exemplary.

Moreover, although exemplary embodiments and/or processes have been described above, at times, in the context of transport data streams, the inventions described and/or illustrated herein may also be implemented in conjunction with other data streams including, for example, program data streams associated with digital data (video and/or audio) playback devices (for example, CD DVD player) implementing MPEG-2 or the like formats. For the sake of brevity, the discussions above will not be repeated in connection with other data streams including, for example, program data streams; however, the inventions and embodiments thereof are fully applicable to other data streams including, for example, program data streams, which are intended to fall within the scope of the present inventions.

It should be noted that the term "circuit" may mean, among other things, a single component (for example, electrical/electronic and/or microelectromechanical) or a multiplicity of components (whether in integrated circuit form or otherwise), which are active and/or passive, and which are coupled together to provide or perform a desired function. The term "circuitry" may mean, among other things, a circuit (whether integrated or otherwise), a group of such circuits, one or more processors, one or more state machines, one or more processors implementing software, one or more gate arrays, programmable gate arrays and/or field programmable gate arrays, or a combination of one or more circuits (whether integrated or otherwise), one or more state machines, one or more processors, one or more processors implementing software, one or more gate arrays, programmable gate arrays and/or field programmable gate arrays. The term "data" may mean, among other things, a current or voltage signal(s) whether in an analog or a digital form, which may be a single bit (or the like) or multiple bits (or the like).

It should be further noted that the various circuits and circuitry disclosed herein may be described using computer aided design tools and expressed (or represented), as data and/or instructions embodied in various computer-readable media, in terms of their behavioral, register transfer, logic component, transistor, layout geometries, and/or other characteristics. Formats of files and other objects in which such circuit expressions may be implemented include, but are not limited to, formats supporting behavioral languages such as C, Verilog, and HLDL, formats supporting register level description languages like RTL, and formats supporting geometry description languages such as GDSII, GDSIII, GDSIV, CIF, MEBES and any other suitable formats and languages. Computer-readable media in which such formatted data and/or instructions may be embodied include, but are not limited to, non-volatile storage media in various forms (e.g., optical, magnetic or semiconductor storage media) and carrier waves that may be used to transfer such formatted data and/or instructions through wireless, optical, or wired signaling media or any combination thereof. Examples of transfers of such formatted data and/or instructions by carrier waves include, but are not limited to, transfers (uploads, downloads, e-mail, etc.) over the Internet and/or other computer networks via one or more data transfer protocols (e.g., HTTP, FTP, SMTP, etc.).

Indeed, when received within a computer system via one or more computer-readable media, such data and/or instruction-based expressions of the above described circuits may be processed by a processing entity (e.g., one or more processors) within the computer system in conjunction with execution of one or more other computer programs including, without limitation, net-list generation programs, place and route programs and the like, to generate a representation or image of a physical manifestation of such circuits. Such representation or image may thereafter be used in device fabrication, for example, by enabling generation of one or more masks that are used to form various components of the circuits in a fabrication process.

**Claims**

1. A device to output video data, the device comprising:

   baseband processor circuitry (18) to demodulate a baseband signal into a data stream having a plurality of packets including a plurality of video packets wherein each video packet includes a video payload, and wherein the baseband processor circuitry (18) outputs the data stream corresponding to the selected channel of the broadcast spectrum, the selected channel being one of a plurality of channels of a broadcast spectrum;
   de-multiplexer circuitry (12), coupled to the baseband processor circuitry (18), to:

   de-multiplex the data stream to obtain the video payload associated with each video packet,
   detect and locate one or more errors in a video payload, and
   generate video error characterization data in response to the detection of an error in a video payload; and
   video decoder circuitry (20), coupled to the de-multiplexer circuitry (12), to: (i) receive the plurality of video payloads and the video error characterization data, (ii) decompress the video payloads, and (iii) conceal one or more errors detected in a video payload using video error characterization data associated therewith, the error characterization data indicating an error case selected from a plurality of error cases, the plurality of error cases comprising loss of lock error, loss of TP sync error, and transport error indicator.

2. The device of claim 1 wherein the video error characterization data includes information which is representative of the type of error and the location of the error in the video payload.

3. The device of claim 1 wherein the video decoder circuitry (20) generates output video data using the video payloads and the video error characterization data and wherein the device further includes a user interface to display video which is representative of the output video data.

4. The device of claim 1 wherein:

   the de-multiplexer circuitry (12) further de-multiplexes the data stream into a plurality of audio packets, wherein each audio packet includes an audio payload,
   the de-multiplexer circuitry (12) is configured to (i) detect and locate one or more errors in an audio payload, and (ii) generate audio error characterization data which is representative of or characterizes one or more errors detected in the audio payload, and
   the device further includes audio decoder circuitry, coupled to the de-multiplexer circuitry (12), to (i) receive the audio payload and the audio error characterization data, (ii) decompress the audio payload, and (iii) conceal one or more errors detected in the audio payload using the audio error characterization data.

5. The device of claim 4 wherein:

   the video decoder circuitry (20) generates output video data using the video payload and video error characterization data,
   the audio decoder circuitry generates output audio data using the audio payload and audio error characterization data, and
   the device further includes a user interface to (i) display video which is representative of the output video data and (ii) output audio which is representative of the output audio data.

6. The device of claim 1 wherein:

   the de-multiplexer circuitry (12) includes:

      error data generation circuitry to generate a plurality of descriptors, wherein each descriptor is associated with a video payload, and wherein the descriptor includes:
      a video error flag, wherein the video error flag is enabled when an error is detected in the video packet of the associated video payload,
      management information to configure the decoder circuitry ; and
      video error characterization data which is representative of or characterizes one or more errors in the video packet when an error is detected in the video packet of the associated video payload; and
      video decoder circuitry (20):

         receives a plurality of video payloads and the descriptors associated therewith, and
         generates output video data using (i) the plurality of received video payloads and (ii) if a video error flag of a descriptor associated with a video payload of the received video payloads is enabled, the descriptor associated with the video payload having the enabled video error flag.

7. The device of claim 6 wherein the video error characterization data includes information which is representative of the type of error and the location of the error in the video packet of the associated video payload

8. The device of claim 6 wherein the plurality of received video payloads includes a first video payload and the first video payload is associated with a first descriptor, and wherein, in response to an enabled video error flag of the first descriptor, the video decoder circuitry (20) generates the output video data using the first video payload and the video error characterization data of the first descriptor by the concealing one or more errors in the first video payload based on the video error characterization data of the first descriptor.

9. The device of claim 6 wherein the data stream is an MPEG type data stream.

**10.** The device of claim 6 wherein the de-multiplexer circuitry (12) outputs each descriptor and associated video payload simultaneously to the video decoder circuitry (20).

**11.** The device of claim 6 wherein each video packet further includes a header.

**12.** The device of claim 6 further includes baseband processor circuitry (18) to demodulate a baseband signal into the data stream having a plurality of the video packets, and wherein the baseband processor circuitry (18) outputs the data stream corresponding to a selected channel to the de-multiplexer circuitry (12).

**13.** The device of claim 6 wherein:

the de-multiplexer circuitry (12) further de-multiplexes the data stream into a plurality of audio packets, wherein each audio packet includes an audio payload, and
the de-multiplexer circuitry (12) is configured to detect and locate one or more errors in one or more of the audio packets, and
the error data generation circuitry further generates a plurality of audio descriptors, wherein each audio descriptor is associated with an audio payload, and wherein the audio descriptor includes:

an audio error flag, wherein the audio error flag is enabled when an error is detected in the audio packet of the associated audio payload, and
audio error characterization data which is representative of or characterizes one or more errors in the audio packet when an error is detected in the audio packet of the associated audio payload, and
the device further includes audio decoder circuitry, coupled to the de-multiplexer circuitry (12), to
receive a plurality of audio payloads and the descriptors associated therewith, and
generate output audio data using the audio payload and, if the audio error flag of the associated audio descriptor is enabled, the audio descriptor associated therewith.

**14.** The device of claim 13 wherein the audio error characterization data includes information which is representative of the type of error and/or the location of the error in the associated audio payload.

**15.** The device of claim 14 further includes baseband processor circuitry (18) to demodulate a baseband signal into the data stream having a plurality of the video packets and a plurality of the audio packets, and wherein the baseband processor circuitry (18) outputs the data stream corresponding to a selected channel to the de-multiplexer circuitry (12).

**Patentansprüche**

**1.** Gerät zum Ausgeben von Videodaten, wobei das Gerät umfasst:

eine Basisbandprozessorschaltung (18) zum Demodulieren eines Basis-bandsignals in einen Datenstrom, der eine Mehrzahl von Paketen einschließlich einer Mehrzahl von Videopaketen aufweist, wobei jedes Videopaket eine Video-nutzlast beinhaltet, und wobei die Basisbandprozessorschaltung (18) den Daten-strom, der zu dem ausgewählten Kanal des Broadcastspektrums korrespondiert, ausgibt, wobei der ausgewählte Kanal einer von einer Mehrzahl von Kanälen eines Broadcastspektrums ist;
eine Demultiplexerschaltung (12), die mit der Basisbandprozessorschaltung (18) gekoppelt ist, zum:

Demultiplexen des Datenstroms, um die mit jedem Videopaket assoziierte Videonutzlast zu erhalten,
Detektieren und Lokalisieren eines oder mehrerer Fehler in einer Video-nutzlast, und
Erzeugen von Videofehlercharakterisierungsdaten in Antwort auf die Detektion eines Fehlers in einer Videonutzlast; und
eine Videodecoderschaltung (20), die mit der Demultiplexerschaltung (12) gekoppelt ist, zum: (i) Empfangen der Mehrzahl von Videonutzlasten und der Videofehlercharakterisierungsdaten, (ii) Dekomprimieren der Videonutzlasten, und (iii) Verschleiern eines oder mehrerer Fehler, die in einer Videonutzlast entdeckt wurden, unter Nutzung von damit assoziierten Videofehlercharakterisierungsdaten, wobei die Fehlercharakterisierungsdaten einen Fehlerfall anzeigen, der aus einer Mehrzahl von Fehlerfällen ausgewählt ist, wobei die Mehrzahl von Fehlerfällen einen Verlust-von-Kopplung-Fehler, einen Verlust-von-TP-Sync-Feh-ler und einen Transportfehlerindikator umfasst.

2. Gerät nach Anspruch 1, wobei die Videofehlercharakterisierungsdaten eine Information beinhalten, die repräsentativ ist für den Typ des Fehlers und den Ort des Fehlers in der Videonutzlast.

3. Gerät nach Anspruch 1, wobei die Videodecoderschaltung (20) Ausgabevideodaten unter Nutzung der Videonutzlasten und der Videofehlercharakterisie-rungsdaten erzeugt, und wobei das Gerät des Weiteren eine Nutzerschnittstelle zum Anzeigen von Video, das repräsentativ ist für die ausgegebenen Videodaten, beinhaltet.

4. Gerät nach Anspruch 1, wobei:

die Demultiplexerschaltung (12) des Weiteren den Datenstrom in eine Mehrzahl von Audiopaketen demultiplext, wobei jedes Audiopaket eine Audionutzlast beinhaltet,
die Demultiplexerschaltung (12) ausgebildet ist, zum: (i) Detektieren und Lokalisieren eines oder mehrerer Fehler in einer Audionutzlast, und (ii) Erzeugen von Audiofehlercharakterisierungsdaten, die repräsentativ sind für einen oder mehrere Fehler, die in der Audionutzlast detektiert wurden, oder die diese charakterisieren, und
das Gerät des Weiteren eine Audiodecoderschaltung beinhaltet, die mit der Demultiplexerschaltung (12) gekoppelt ist, zum: (i) Empfangen der Audionutzlast und der Audiofehlercharakterisierungsdaten, (ii) Dekomprimieren der Audionutzlast, und (iii) Verschleiern eines oder mehrerer Fehler, in der Audionutzlast detektiert wurden, unter Nutzung der Audiofehlercharakterisierungsdaten.

5. Gerät nach Anspruch 4, wobei:

die Videodecoderschaltung (20) Ausgabevideodaten unter Nutzung der Videonutzlast und der Videofehlercharakterisierungsdaten erzeugt,
die Audiodecoderschaltung Ausgabeaudiodaten unter Nutzung der Audionutzlast und der Audiofehlercharakterisierungsdaten erzeugt, und
das Gerät des Weiteren eine Nutzerschnittstelle beinhaltet, zum: (i) Anzeigen von Video, das repräsentativ ist für die Ausgabevideodaten, und (ii) Ausgeben von Audio, das repräsentativ ist für die Ausgabeaudiodaten.

6. Gerät nach Anspruch 1, wobei:

die Demultiplexerschaltung (12) beinhaltet:

eine Fehlerdatenerzeugungsschaltung zum Erzeugen einer Mehrzahl von Deskriptoren, wobei jeder Deskriptor mit einer Videonutzlast assoziiert ist, und wobei der Deskriptor beinhaltet:
ein Videofehlerflag, wobei das Videofehlerflag aktiviert ist, wenn ein Fehler in dem Videopaket der assoziierten Videonutzlast detektiert wurde,
eine Managementinformation zum Konfigurieren der Decoderschaltung; und
Videofehlercharakterisierungsdaten, die repräsentativ sind für einen oder mehrere Fehler in dem Videopaket, oder die diese charakterisieren, wenn ein Fehler in dem Videopaket der assoziierten Videonutzlast detektiert wurde; und
wobei die Videodecoderschaltung (20):

eine Mehrzahl von Videonutzlasten und die damit assoziierten Deskriptoren empfängt, und
Ausgabevideodaten unter Nutzung (i) der Mehrzahl von empfangenen Videonutzlasten und (ii), falls ein Videofehlerflag eines Deskriptors, der mit einer Videonutzlast der empfangenen Videonutzlasten assoziiert ist, aktiviert ist, des Deskriptors, der mit der Videonutzlast, die das aktivierte Videofehlerflag aufweist, assoziiert ist, erzeugt.

7. Gerät nach Anspruch 6, wobei die Videofehlercharakterisierungsdaten eine Information beinhalten, die repräsentativ ist für den Typ des Fehlers und den Ort des Fehlers in dem Videopaket der assoziierten Videonutzlast.

8. Gerät nach Anspruch 6, wobei die Mehrzahl der empfangenen Videonutzlasten eine erste Videonutzlast beinhaltet und die erste Videonutzlast mit einem ersten Deskriptor assoziiert ist, und wobei, in Antwort auf ein aktiviertes Videofehlerflag des ersten Deskriptors, die Videodecoderschaltung (20) die Ausgabevideodaten unter Nutzung der ersten Videonutzlast und der Videofehlercharakterisierungsdaten des ersten Deskriptors durch das Verschleiern eines oder mehrerer Fehler in der ersten Videonutzlast basierend auf den Videofehlercharakterisierungsdaten des ersten Deskriptors erzeugt.

9. Gerät nach Anspruch 6, wobei der Datenstrom ein Datenstrom vom MPEG-Typ ist.

10. Gerät nach Anspruch 6, wobei die Demultiplexerschaltung (12) jeden Deskriptor und die assoziierte Videonutzlast simultan an die Videodecoderschaltung (20) ausgibt.

11. Gerät nach Anspruch 6, wobei jedes Videopaket des Weiteren einen Header beinhaltet.

12. Gerät nach Anspruch 6, des Weiteren beinhaltend eine Basisbandprozessorschaltung (18) zum Demodulieren eines Basisbandsignals in einen Datenstrom, der eine Mehrzahl von Videopaketen aufweist, wobei die Basisbandprozessorschaltung (18) den Datenstrom, der zu einem ausgewählten Kanal korrespondiert, an die Demultiplexerschaltung (12) ausgibt.

13. Gerät nach Anspruch 6, wobei:

    die Demultiplexerschaltung (12) des Weiteren den Datenstrom in eine Mehrzahl von Audiopaketen demultiplext, wobei jedes Audiopaket eine Audionutzlast beinhaltet, und
    die Demultiplexerschaltung (12) ausgebildet ist, einen oder mehrere Fehler in einem oder mehreren der Audiopakete zu detektieren und zu lokalisieren, und
    die Fehlerdatenerzeugungsschaltung des Weiteren eine Mehrzahl von Audiodeskriptoren erzeugt, wobei jeder Audiodeskriptor mit einer Audionutzlast assoziiert ist, und wobei der Audiodeskriptor beinhaltet:

        ein Audiofehlerflag, wobei das Audiofehlerflag aktiviert ist, wenn ein Fehler in dem Audiopaket der assoziierten Audionutzlast detektiert wurde, und
        Audiofehlercharakterisierungsdaten, die repräsentativ sind für einen oder mehrere Fehler in dem Audiopaket, oder die diese charakterisieren, wenn ein Fehler in dem Audiopaket der assoziierten Audionutzlast detektiert wurde, und
        das Gerät des Weiteren eine Audiodecoderschaltung, die mit der Demultiplexerschaltung (12) gekoppelt ist, beinhaltet, zum
        Empfangen einer Mehrzahl von Audionutzlasten und der damit assoziierten Deskriptoren, und
        Erzeugen von Ausgabeaudiodaten unter Nutzung der Audionutzlast und, falls das Audiofehlerflag des assoziierten Audiodeskriptors aktiviert ist, des damit assoziierten Audiodeskriptors.

14. Gerät nach Anspruch 13, wobei die Audiofehlercharakterisierungsdaten eine Information beinhalten, die repräsentativ ist für den Typ des Fehlers und/oder den Ort des Fehlers in der assoziierten Audionutzlast.

15. Gerät nach Anspruch 14, des Weiteren beinhaltend eine Basisbandprozessorschaltung (18) zum Demodulieren eines Basisbandsignals in den Datenstrom, der eine Mehrzahl von Videopaketen und eine Mehrzahl von Audiopaketen aufweist, und wobei die Basisbandprozessorschaltung (18) den Datenstrom, der zu einem ausgewählten Kanal korrespondiert, an die Demultiplexerschaltung (12) ausgibt.


**Revendications**

1. Dispositif d'émission de données vidéo, le dispositif comportant :

    des circuits de processeur de bande de base (18) destinés à démoduler un signal de bande de base en un flux de données contenant une pluralité de paquets vidéo dans laquelle chaque paquet vidéo comporte une charge utile vidéo et dans laquelle les circuits de processeur de bande de base (18) émettent en sortie le flux de données correspondant au canal sélectionné du spectre de diffusion, le canal sélectionné étant un parmi une pluralité de canaux d'un spectre de diffusion ;
    des circuits de démultiplexage (12) accouplés aux circuits de processeur de bande de base (18), pour :

        démultiplexer le flux de données afin d'obtenir la charge utile vidéo associée à chaque paquet vidéo,
        détecter et localiser une ou plusieurs erreurs dans une charge utile vidéo, et
        générer des données de caractérisation d'erreur vidéo en réponse à la détection d'une erreur dans une charge utile vidéo, et
        des circuits de décodage vidéo (20), accouplés aux circuits de démultiplexage (12) de façon à : (i) recevoir la pluralité de charges utiles vidéo et les données de caractérisation d'erreur vidéo, (ii) décompresser les charges utiles vidéo ; et (iii) dissimuler une ou plusieurs erreurs détectées dans une charge utile vidéo à l'aide des données de caractérisation d'erreur vidéo qui lui sont associées, les données de caractérisation d'erreur indiquant un cas d'erreur choisi parmi une pluralité de cas d'erreur, la pluralité des cas d'erreur comprenant les erreurs de perte de verrouillage de phase, les erreurs de perte de synchronisation TP et les indicateurs d'erreur de transport.

2. Dispositif selon la revendication 1, dans lequel les données de caractérisation d'erreur vidéo comportent des informations représentatives du type d'erreur et de localisation de l'erreur dans la charge utile vidéo.

3. Dispositif selon la revendication 1, dans lequel les circuits de décodage vidéo (20) génèrent des données vidéo sortantes à l'aide des charges utiles vidéo et des données de caractérisation d'erreur vidéo et dans lequel le dispositif comporte en outre une interface utilisateur pour afficher de la vidéo représentative des données vidéo sortantes.

4. Dispositif selon la revendication 1, dans lequel :

les circuits de démultiplexage (12) assurent en outre le démultiplexage du flux de données en une pluralité de paquets audio, dans lequel chaque paquet audio inclut une charge utile audio,
les circuits de démultiplexage (12) sont configurés pour (i) détecter et localiser une ou plusieurs erreurs dans une charge utile audio et (ii) générer des données de caractérisation des erreurs audio représentatives ou caractérisant une ou plusieurs erreurs détectées dans la charge utile audio, et
le dispositif comporte en outre des circuit de décodage audio, accouplés aux circuits de démultiplexage (12) de façon à (i) recevoir la charge utile audio et les données de caractérisation d'erreur audio, (ii) décompresser la charge utile audio et (iii) dissimuler une ou plusieurs erreurs détectées dans la charge utile audio en utilisant les données de caractérisation d'erreur audio.

5. Dispositif selon la revendication 4, dans lequel :

les circuits de décodage vidéo (20) génèrent des données vidéo sortantes en utilisant la charge utile vidéo et les données de caractérisation d'erreur vidéo,
les circuits de décodage audio génèrent des données audio sortantes à l'aide de la charge utile audio, et
le dispositif comporte en plus une interface utilisateur pour (i) l'affichage de contenu vidéo représentatif des données vidéo sortantes et (ii) du contenu audio sortant représentatif des données audio sortantes.

6. Dispositif selon la revendication 1 dans lequel :

les circuits de démultiplexage (12) comportent :

des circuits de génération de données d'erreur pour générer une pluralité de descripteurs, dans lequel chaque descripteur est associé à une charge utile vidéo, et dans laquelle le descripteur comporte :

un indicateur d'erreur vidéo, dans laquelle l'indicateur d'erreur vidéo est activé lorsqu'une erreur est détectée dans le paquet vidéo de la charge utile vidéo associée,
des informations de gestion pour configurer les circuits de décodage ; et
des données de caractérisation d'erreur vidéo qui sont représentatives ou qui caractérisent une ou plusieurs erreurs dans le paquet vidéo lorsqu'une erreur est détectée dans le paquet vidéo de la charge utile vidéo associée ; et
des circuits de décodage vidéo (20) :

reçoit une pluralité de charges utiles vidéo et les descripteurs qui s'y rattachent, et
génère des données vidéo en utilisant (i) la pluralité des charges utiles vidéo reçues et, (ii) si un indicateur d'erreur vidéo d'un descripteur associé à une charge utile vidéo parmi les charges utiles vidéo reçues est activé, le descripteur associé à la charge utile vidéo ayant l'indicateur d'erreur vidéo activé.

7. Dispositif selon la revendication 6, dans lequel les données de caractérisation d'erreur vidéo comportent des informations représentatives du type d'erreur et de l'emplacement de l'erreur dans le paquet vidéo de la charge utile vidéo associée.

**8.** Dispositif selon la revendication 6, dans lequel la pluralité des charges utiles vidéo reçues comporte une première charge utile vidéo et la première charge utile vidéo est associée à un premier descripteur, et dans lequel, en réponse à un indicateur activé d'erreur vidéo du premier descripteur, les circuits de décodage vidéo (20) génèrent les données vidéo sortantes en utilisant la première charge utile vidéo et les données de caractérisation d'erreur vidéo du premier descripteur en dissimulant une ou plusieurs erreurs dans la première charge utile vidéo sur la base des données de caractérisation d'erreur vidéo du premier descripteur.

**9.** Dispositif selon la revendication 6 dans lequel le flux de données est un flux de données de type MPEG.

**10.** Dispositif selon la revendication 6, dans lequel les circuits de démultiplexage (12) émettent en sortie chaque descripteur et la charge utile vidéo qui lui est associée simultanément vers les circuits de décodage vidéo (20).

**11.** Dispositif selon la revendication 6 dans lequel chaque paquet vidéo comporte en outre un en-tête.

**12.** Le dispositif selon la revendication 6 comporte en outre des circuits de processeur de bande de base (18) pour démoduler un signal bande de base dans le flux de données ayant une pluralité des paquets vidéo, et dans lequel les circuits de processeur de bande de base (18) émettent en sortie le flux de données correspondant à un canal sélectionné vers les circuits de démultiplexage (12).

**13.** Dispositif selon la revendication 6, dans lequel :

les circuits de démultiplexage (12) en outre assurent le démultiplexage du flux de données en une pluralité de paquets audio, dans lequel chaque paquet audio inclut une charge utile audio, et
les circuits de démultiplexage (12) sont configurés pour détecter et localiser une ou plusieurs erreurs dans un ou plusieurs des paquets audio, et
les circuits de génération de données d'erreurs génèrent une pluralité de descripteurs audio, dans lequel chaque descripteur audio est associé à une charge utile audio, et dans laquelle le descripteur audio comporte :

un indicateur d'erreur audio, dans laquelle l'indicateur d'erreur audio est activé lorsqu'une erreur est détectée dans le paquet audio de la charge utile audio associée, et
des données de caractérisation d'erreur audio qui sont représentatives ou qui caractérisent une ou plusieurs erreurs dans le paquet audio lorsqu'une erreur est détectée dans le paquet audio de la charge utile audio associée ; et
le dispositif comporte en outre des circuits de décodage audio, accouplés aux circuits de démultiplexage (12) de façon à
recevoir une pluralité de charges utiles audio et les descripteurs associés à celles-ci, et
générer des données audio sortantes à l'aide de la charge utile audio et, si l'indicateur d'erreur audio du descripteur audio associé est activé, le descripteur audio qui lui est associé.

**14.** Dispositif selon la revendication 13, dans lequel les données de caractérisation d'erreur audio comportent des informations représentatives du type d'erreur et/ou de localisation de l'erreur dans la charge utile audio.

**15.** Le dispositif selon la revendication 14 comporte en outre des circuits de processeur de bande de base (18) pour démoduler un signal bande de base dans le flux de données ayant une pluralité des paquets vidéo et une pluralité des paquets audio, et dans lequel les circuits de processeur de bande de base (18) émettent en sortie le flux de données correspondant à un canal sélectionné vers les circuits de démultiplexage (12).

EP 2 329 654 B1

10a

| | Transport Stream De-Multiplexer Circuitry 12 | |

Input → ---- → | Transport Stream De-Multiplexer Circuitry 12 | → ---- → Output

FIGURE 1A

14

● ● ● | Header | Payload or Data Load | Header | Payload or Data Load | Header | ● ● ●

⎵⎵⎵ Transport Packet ⎵⎵⎵ Transport Packet

FIGURE 1B

14

● ● ● | $TP_0$ | $TP_1$ | ● ● ● | $TP_{n-1}$ | $TP_n$ | ● ● ●

FIGURE 1C

FIGURE 2A

FIGURE 2B

EP 2 329 654 B1

FIGURE 3A

FIGURE 3B

FIGURE 3C

FIGURE 3D

EP 2 329 654 B1

Receiving Device 10

Receiver
Circuitry
10a

Video
Display

and/or

and/or

**FIGURE 3E**

Receiver
Device
10

Processor
Circuitry

and/or

User
Interface

and/or

Recording
Device

and/or

and/or

**FIGURE 3F**

EP 2 329 654 B1

EP 2 329 654 B1

Receiver Device 10

Processor
Circuitry

and/or

User
Interface

and/or

Recording
Device

and/or

and/or

Receiver
Circuitry
10a

FIGURE 3G

FIGURE 4A

EP 2 329 654 B1

Transport Stream
De-Multiplexer
Circuitry
12

Memory 32a

Input → | Buffer 26 | → | Data Filter Circuitry 28 | → ● → | Buffer(s) 34 | → | Memory Access Circuitry 36 | → Output

| Detection and Extraction Circuitry 30 |

| Error Data Generation Circuitry 40 |

## FIGURE 4B

Transport Stream
De-Multiplexer
Circuitry
12

Input → Buffer 26 → Data Filter Circuitry 28 →

Memory 32a

Buffer(s) 34

Memory Access Circuitry 36 → Output

Detection and Extraction Circuitry 30

Memory 32b

Queue 46 → Output

Error Data Generation Circuitry 40

FIGURE 4C

Transport Stream
De-Multiplexer
Circuitry
12

Memory 32a

Input → Buffer 26 → Data Filter Circuitry 28 → Buffer(s) 34 → Memory Access Circuitry 36 → Output

Detection and Extraction Circuitry 30

Memory 32b

Queue 46 → Output

Error Data Generation Circuitry 40

Clock Generation Circuitry → Output

FIGURE 4D

EP 2 329 654 B1

## FIGURE 5A

14a

TS payload data

184 bytes

188 bytes

Continuity_counter

Adaptation_filed_control

Transport_scrambling_control

PID

3 bytes

Transport_priority

PUSI_bit

TEI_bit

Sync_byte

1 byte

## FIGURE 5B

14a'

5-byte extraction result

TS payload data

184 bytes

192 bytes

Continuity_counter

Adaptation_filed_control

Transport_scrambling_control

PID

3 bytes

Transport_priority

PUSI_bit

TEI_bit

14a"

Payload or Data Load
42

Descriptor
44

**FIGURE 5C**

Descriptor 44

Error Flag(s)

**FIGURE 5D**

Descriptor 44

| Error Flag(s) | Error Information/Data |
|---|---|

**FIGURE 5E**

Descriptor 44

| Error Flag(s) | Management Information/Data | Error Information/Data |
|---|---|---|

**FIGURE 5F**

EP 2 329 654 B1

Descriptor 44

| Management Information/Data | Error Information/Data |

**FIGURE 5H**

Descriptor 44

| Management Information/Data |

**FIGURE 5J**

Descriptor 44

| Error Information/Data |

**FIGURE 5G**

Descriptor 44

| Error Flag(s) | Management Information/Data |

**FIGURE 5I**

Transport Data Stream 14

FIGURE 6A

FIGURE 6B

EP 2 329 654 B1

Exemplary Video
Descriptor 44a

| 31 | 4 | 3:2 | 1 | 0 |
|---|---|---|---|---|

| Reserved | Picture Type | SliceCFlag | AUCFlag |
|---|---|---|---|
| DTS | | | |
| PTS | | | |
| AU Start Address | | | |
| AU Byte Length | | | |
| Error Slice Number (8-bit each, variable numbers) | | | |
| 0xFFFFFFFF (Descriptor Terminating Word) | | | |

FIGURE 7A

Exemplary Audio
Descriptor 44b

| 31 | 1 | 0 |
|---|---|---|

| Reserved | AUCFlag |
|---|---|
| PTS | |
| AU Start Address | |
| AU Byte Length | |
| 0xFFFFFFFF (Descriptor Terminating Word) | |

FIGURE 7B

| | 31 | 3:2 | 1 | 0 |

| 31 | | 3:2 | 1 | 0 |
|---|---|---|---|---|
| Reserved | PicType | SliceCFlag=0 | AUCFlag=1 | |
| DTS | | | | |
| PTS | | | | |
| AU Start Address | | | | |
| AU Byte Length | | | | |
| 0xFFFFFFFF (Descriptor Terminating Word) | | | | |

FIGURE 8A

| 31 | 4 | 3:2 | 1 | 0 |
|---|---|---|---|---|
| Reserved | PicType | SliceCFlag=1 | AUCFlag=0 | |
| DTS | | | | |
| PTS | | | | |
| AU Start Address | | | | |
| AU Byte Length | | | | |
| 0x00040201 | | | | |
| 0xFFFFFFFF (Descriptor Terminating Word) | | | | |

FIGURE 8B

EP 2 329 654 B1

START

Read out next
TP from TB

Yes

TEI == 1?

No

PID ==
0x1FFF?

Yes

PUSI == 1?

No

Discard NULL
packets

Yes

Switch to TP sync
loss case

No

Reset local
STC with new
PCR

Yes

PID ==
PCR_PID?

No

PID == VPID?

No

Yes

Yes

PUSI == 1?

No

CC
continuous?

No

Slice SC
found?

No

Record
current
slice
number

CC
continuous?

Yes

Yes

Yes

Normal
decoding,
record slice
numbers if
any

write slice numbers
that need to be
concealed to current
descriptor

No

Finish current VAU
Descriptor with slice
numbers that need to
be concealed and
write to VDQ

Finish current VAU
Descriptor with slice
numbers that need to be
concealed normally and
write to VDQ

END

FIGURE 9

EP 2 329 654 B1

| 31 | | 1 | 0 |
|---|---|---|---|
| Reserved | | | AUCFlag=1 |
| PTS | | | |
| AU Start Address | | | |
| AU Byte Length | | | |
| 0xFFFFFFFF (Descriptor Terminating Word) | | | |

# FIGURE 10

FIGURE 11A

FIGURE 11B

FIGURE 11C

EP 2 329 654 B1

EP 2 329 654 B1

FIGURE 11D

FIGURE 11E

FIGURE 12A

Transport Stream De-Multiplexer Circuitry 12

FIGURE 12B

Transport Stream De-Multiplexer Circuitry 12

FIGURE 13A

FIGURE 13B

EP 2 329 654 B1

Input → **Transport Stream De-Multiplexer Circuitry 12** → **Processor Circuitry 24** - - - - **User Interface 22**

**FIGURE 13C**

Input → **Transport Stream De-Multiplexer Circuitry 12** → **Processor Circuitry 24** - - - - **User Interface 22**

52

**FIGURE 13D**

FIGURE 14A

FIGURE 14B

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 61194315 A
- EP 1940167 A1
- US 20050089104 A1
- EP 1111935 A1

### Non-patent literature cited in the description

- Comparison of error concealment techniques for an MPEG-2 video decoder in terrestrial TV-broadcasting. **KAISER et al.** SIGNAL PROCESSING, IMAGE COMMUNICATION. ELSEVIER SCIENCE PUBLISHERS, 01 May 1999, vol. 14, 655-676